# EUROPEAN PATENT SPECIFICATION

(11) **EP 4 357 397 B1**
(45) Date of publication and mention of the grant of the patent: **05.08.2026**
(21) Application number: 22825099.9
(22) Date of filing: 17.06.2022
(51) Int. Cl.: C08J 11/10, C08L 101/00, C08L 101/02, B29B 17/02, C08J 11/14

(54) **SEPARATION/COLLECTION METHOD FOR RESIN MIXTURE**
TRENN-/SAMMELVERFAHREN FÜR HARZMISCHUNG
PROCÉDÉ DE SÉPARATION/COLLECTE DE MÉLANGE DE RÉSINE

(30) Priority: 18.06.2021 JP 2021101556; 16.06.2022 JP 2022097671
(43) Date of publication of application: 24.04.2024
(73) Proprietor: UBE Corporation, Ube-shi, Yamaguchi 755-8633 (JP); TOPPAN INC., Tokyo 110-8560 (JP)
(72) Inventor: WATANABE, Masaru, Sendai-shi, Miyagi 980-8577 (JP); YAMAGUCHI, Aritomo, Sendai-shi, Miyagi 983-8551 (JP); SATO, Osamu, Sendai-shi, Miyagi 983-8551 (JP); IRISA, Yuuma, Ube-shi, Yamaguchi 755-8633 (JP); TAKAMA, Akira, Ube-shi, Yamaguchi 755-8633 (JP); NISHIMURA, Kousuke, Ube-shi, Yamaguchi 755-8633 (JP); KUJIRAOKA, Hiroki, Ube-shi, Yamaguchi 755-8633 (JP); MIYAZAKI, Hideki, Sendai-City, Miyagi 981-3224 (JP); AKIMOTO, Keita, Kusatsu-shi, Shiga 525-0044 (JP); TAKAHATA, Takuya, Kusatsu-shi, Shiga 525-0044 (JP); KUGIMOTO, Daisuke, Yokkaichi-shi, Mie 510-8540 (JP); KOUDA, Shingo, Yokkaichi-shi, Mie 510-8540 (JP); HAMURA, Satoshi, Tokyo 105-8623 (JP); IMAI, Takahiro, Tokyo 110-8560 (JP); OMORI, Yumiko, Tokyo 110-8560 (JP); KAWA, Manabu, Tokyo 105-0021 (JP)
(74) Representative: Forstmeyer, Dietmar
(86) International application number: PCT/JP2022/024410
(87) International publication number: WO 2022/265112

(56) References cited:
- JP-A- 2000 169 623
- JP-A- 2000 169 623
- JP-A- 2007 002 160
- JP-A- 2007 002 160
- JP-A- H0 892 411
- JP-A- H0 892 411
- JP-A- H06 198 652
- JP-A- H06 198 652
- JP-A- H08 302 061

## Description

### FIELD OF THE INVENTION

The present invention relates to a method of separating and recovering, from a resin mixture of a resin layer containing a hydrolyzable polymer and a resin layer containing a nonhydrolyzable polymer, a hydrolytic component of the hydrolyzable resin and the nonhydrolyzable resin.

### BACKGROUND OF THE INVENTION

In order to construct a sustainable society, thorough circulation of carbon resources and conservation of the global environment are required, and promotion of recycling of a waste plastic such as a discarded plastic molded body is one major issue.

As a technique of recycling a waste plastic, for example, a technique of recovering a polymer that forms a plastic molded article or a hydrolyzate thereof by treating a multilayer plastic molded article and water at a high temperature has been proposed (See, for example, Patent Literatures 1 and 2.).

### CITATION LIST

### PATENT LITERATURES

Patent Literature 1: JP-A-H05-271328 ("JP-A" means an unexamined published Japanese patent application)
Patent Literature 2: JP-A-H11-323006

JP H08 92411 A discloses a method for recovering recyclable polyolefin from a laminate of polyolefin and a resin other than polyolefin. JP 2007 002160 A discloses a method for depolymerizing biodegradable polyesters. JP H06 198652 A discloses a method for recycling painted plastic molded articles. JP 2000 169623 A discloses a method for recycling used polyethylene terephthalate.

### SUMMARY OF INVENTION

### TECHNICAL PROBLEM

In a waste plastic recycling technique, when a polymer or a raw material compound thereof can be recovered for a plastic molded article having a multilayer structure, particularly a film-shaped molded article (also referred to as a multilayer plastic film) occupying a large proportion as a waste plastic, recycling efficiency is improved, which contributes to thorough circulation of carbon resources and conservation of the global environment.

However, among the multilayer plastic films, particularly a film made of different kinds of materials (also referred to as a heterogeneous multilayer film) includes a plurality of kinds of polymers or a material other than the polymers (there may also be a plurality of kinds of materials). Therefore, it is difficult to recycle a polymer constituting a layer as it is (also referred to as material recycling) and simultaneously recycle a polymer constituting another layer into a raw material compound thereof (also referred to as chemical recycling) (hereinafter, also referred to as a hybrid recycling method), and recycling efficiency is low. In addition, in such a case, a polymer recovered through a complicated recycling process or contact with various chemical components has characteristics (molecular weight distribution and the like) changed with respect to a polymer before being recovered (a polymer constituting a layer), and cannot be reused as a molding material such as a film, and there is a high possibility that applications thereof are limited even when the polymer can be reused. Therefore, recycling of such a heterogeneous multilayer film is more dependent on thermal recycling by combustion than the hybrid recycling method, and technical establishment of the hybrid recycling method is desired.

The present invention provides a method of simultaneously separating and recovering, from a resin mixture containing a resin layer containing a hydrolyzable polymer and a resin layer containing a nonhydrolyzable polymer, the hydrolyzable polymer as a raw material compound thereof and the nonhydrolyzable polymer as a polymer in which a characteristic change such as a change in molecular weight distribution is suppressed. Furthermore, the present invention provides a method of simultaneously separating and recovering, from the resin mixture, a raw material compound of the hydrolyzable polymer and the nonhydrolyzable polymer with high recycling efficiency.

In the present invention, "simultaneously" means that a hydrolyzable polymer (hydrolytic component) and a nonhydrolyzable polymer B are separated from each other and recovered (hybrid recycling is enabled) by performing one hydrothermal reaction treatment, and does not mean that the hydrolyzable polymer and the nonhydrolyzable polymer are taken up simultaneously in time.

### SOLUTION TO PROBLEM

The object of the present invention has been achieved by the following means.
<1> A separation and recovery method of separating and recovering, from a mixture containing at least a resin layer 1 containing a hydrolyzable polymer A as a main component and a resin layer 2 containing a nonhydrolyzable polymer B as a main component, at least one hydrolytic component a of the hydrolyzable polymer A and the nonhydrolyzable polymer B, the method comprising:
   a decomposition and separation step of subjecting the mixture to a hydrothermal reaction treatment to hydrolyze and separate the hydrolyzable polymer A in the mixture, and to separate the nonhydrolyzable polymer B in the mixture;
   wherein the hydrothermal reaction treatment is performed in water of 300 to 5000 parts by mass with respect to 100 parts by mass of the mixture;
   wherein the mixture to be subjected to the hydrothermal reaction treatment is subjected to a water absorption treatment and to a heating pretreatment; and
   wherein the recovered nonhydrolyzable polymer B maintains an average molecular weight of 0.7 times or more an average molecular weight of the nonhydrolyzable polymer B before the hydrothermal reaction treatment, wherein the average molecular weight of a polymer is a value measured by a GPC measurement as described in the Examples.
<2> The separation and recovery method described in <1>, wherein the hydrothermal reaction treatment is performed under a pressure of 101 kPa (1 atm) or more at a treatment temperature and a treatment time included in a quadrangular region (including a boundary line) having a point A1 (1, 390), a point 2 (1, 250), a point 3 (60, 250), and a point 4 (60, 375) as vertices in an orthogonal coordinate system in which an x axis represents a treatment time (minute) and a y axis represents a treatment temperature (°C), and/or under a pressure of 101 kPa (1 atm) or more at a treatment temperature and a treatment time included in a quadrangular region (including a boundary line) having a point A (1, 375), a point B (1, 325), a point C (60, 275), and a point D (60, 300) as vertices in an orthogonal coordinate system in which an x axis represents a treatment time (minute) and a y axis represents a treatment temperature (°C).
<3> The separation and recovery method described in <1> or <2>, wherein the hydrolytic component a of the hydrolyzable polymer A is transferred to an aqueous phase.
<4> The separation and recovery method described in any one of <1> to <3>, wherein the nonhydrolyzable polymer B is separated from an aqueous phase.
<5> The separation and recovery method described in any one of <1> to <4>, wherein the mixture to be subjected to the hydrothermal reaction treatment is obtained by removing a solid component from a melt of the mixture.
<6> The separation and recovery method described in any one of <1> to <5>, wherein the hydrolytic component a contains one or more kinds of components selected from the group consisting of terephthalic acid, 2,6-naphthalenedicarboxylic acid, ethylene glycol, 1,3-propanediol, 1,4-butanediol, tetrahydrofuran, aminocaproic acid, ε-caprolactam, hexamethylenediamine, adipic acid, and derivatives thereof.
<7> The separation and recovery method described in any one of <1> to <6>, wherein the nonhydrolyzable polymer B is one or more kinds of polymers selected from the group consisting of polyethylene, polypropylene, and polystyrene.
<8> The separation and recovery method described in any one of <1> to <7>, wherein the mixture is a laminate.
<9> The separation and recovery method described in <8>, wherein the laminate includes two or more layers of at least one of the resin layer 1 and the resin layer 2; and or wherein the laminate includes at least one of a coating layer C and an adhesive layer D.
<10> The separation and recovery method described in any one of <1> to <9>, wherein when the hydrolyzable polymer A contained in the resin layer 1 is 100%, the hydrolytic component a is recovered in a molar ratio of 70% or more.
<11> The separation and recovery method described in any one of <1> to <10>, wherein the mixture that has been subjected to a water absorption treatment and is to be subjected to the hydrothermal reaction treatment is subjected to a heating pretreatment in a temperature range of 200 to 300°C.
<12> The separation and recovery method described in any one of <1> to <11>, wherein a mechanical treatment is applied to the mixture to be subjected to the water absorption treatment.

### ADVANTAGEOUS EFFECTS OF INVENTION

By the separation and recovery method of the present invention, from a resin mixture containing a resin layer containing a hydrolyzable polymer and a resin layer containing a nonhydrolyzable polymer, the hydrolyzable polymer as a raw material compound thereof (hydrolytic component) and the nonhydrolyzable polymer as a polymer in which a change in weight molecular weight is suppressed can be simultaneously separated and recovered.

### BRIEF DESCRIPTION OF DRAWINGS

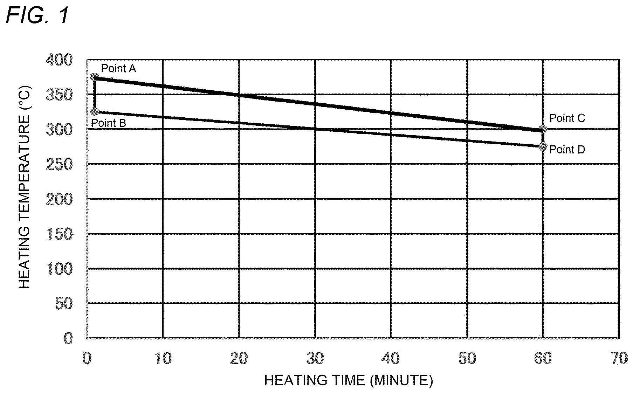

{FIG 1}
FIG. 1 is a diagram illustrating a region of preferable hydrothermal reaction treatment conditions in a decomposition and separation step of the present invention. The above and other features and advantages of the present invention will be more apparent from the following description appropriately with reference to the attached drawings.

### DESCRIPTION OF EMBODIMENTS

In the present invention, a hydrolyzable polymer refers to a polymer in which a bond of a constituent raw material compound constituting the polymer is formed via a hydrolyzable bond (a main chain of the polymer is hydrolyzable), in which the polymer undergoes hydrolysis due to chemical properties of the constituent raw material compound in a decomposition and separation step (hydrothermal reaction treatment) of the present invention. Meanwhile, a nonhydrolyzable polymer refers to a polymer in which a bond of a constituent raw material compound constituting the polymer is formed via a bond that is not hydrolyzed or is hardly hydrolyzed, in which the polymer is not hydrolyzed or is hardly hydrolyzed into the constituent raw material compound in a decomposition and separation step of the present invention, and as a specific representative example, refers to a polymer in which a chemical structure of a polymer main chain (linking chain) substantially contains only carbon atoms.

In the present invention, a resin layer containing a specific polymer as a main component refers to a resin layer containing a specific polymer as a maximum content component among polymer components.

In the present invention, a polymer is used as a term meaning a polymer itself (a state in which no additive is mixed). A polymer composition means a composition in which an optional component (additive) is appropriately contained in a polymer. A resin is used as a term having the same meaning as the polymer composition.

In the present invention, a numerical range expressed with the term "to" refers to a range including numerical values before and after the term "to" as a lower limit and an upper limit.

### [Separation and recovery method of the present invention]

### <Mixture>

In a separation and recovery method of the present invention, a mixture containing at least a resin layer 1 containing a hydrolyzable polymer A as a main component and a resin layer 2 containing a nonhydrolyzable polymer B as a main component is used as a treatment target. This mixture contains at least the resin layer 1 containing the hydrolyzable polymer A and the resin layer 2 containing the nonhydrolyzable polymer B, and therefore is also referred to as a resin mixture or a heterogeneous resin mixture.

The mixture only needs to be a mixture containing the resin layer 1 and the resin layer 2, and examples thereof include a simple mixture of the resin layer 1 and the resin layer 2 which are not laminated on each other, a laminate of the resin layer 1 and the resin layer 2, and a mixture of the simple mixture and the laminate. As the mixture, a laminate (laminated film) can be used, and in this case, a multilayer plastic film, particularly a heterogeneous multilayer film, which is discarded in a large amount as a waste plastic, can be applied. The form (shape) of the mixture is not particularly limited, and the mixture or the laminate can be used as it is. However, a crushed product (a pulverized product, a cracked product, or a cut product) or a fine powder (granule)-shaped product is preferable in terms of rapidly melting the mixture in a hydrothermal reaction treatment, reducing the size (also referred to as a dispersion diameter) of a polymer lump in water after melting, and improving a water absorption rate in a water absorption treatment. The size of the crushed product or the like at this time is appropriately determined in consideration of the above points, for example, so as to reduce the dispersion diameter of the polymer in water after melting in the hydrothermal reaction treatment.

The size of the crushed product (a pulverized product, a cracked product, or a cut product) of the mixture is preferably small from a viewpoint of improving a contact area of the hydrolyzable polymer A with water during a water supply treatment and from a viewpoint of reducing the dispersion diameter of the hydrolyzable polymer A after melting during the hydrothermal treatment. When the mixture is a film, for example, a cut product having a size of 50 mm or less × 50 mm or less is preferable, and a cut product having a size of 5 mm or less × 5 mm or less is more preferable.

Each of the resin layer 1 and the resin layer 2 in the mixture, particularly in the laminate, may be formed of a single layer or two or more layers.

A mixing ratio (mass ratio) between the resin layer 1 and the resin layer 2 in the mixture is not particularly limited, and can be appropriately set, but for example, can be set to (resin layer 1) : (resin layer 2) = 1 : 0.1 to 1 : 10 (mass ratio).

The resin layer 1 in the mixture contains one or more kinds of hydrolyzable polymers A as a main component. Examples of the hydrolyzable polymer include a condensation polymer. The condensation polymer is a polymer generated by polycondensation in which a low molecular weight molecule such as a water molecule or an alcohol molecule is detached from a monomer serving as a polymerization reaction raw material. Examples thereof include polyesters, polycarbonates, polyamides (also abbreviated as PA in the present invention) (also including ring-opening polymerization polyamides such as nylon 6, generated not by polycondensation but by ring-opening polymerization of ε-caprolactam for convenience in the present invention), polyacetals, and polyethers. Note that, in the present invention, even when a polymer is generated by a reaction mode other than polycondensation (for example, ring-opening polymerization), the polymer is included here for convenience as long as the polymer is any one of the above exemplified polymers. More specific examples thereof will be described below:
a polymer having an ester bond (-COO-) in a repeating unit of a polymer main chain, such as polyethylene terephthalate (PET), polybutylene terephthalate (PBT), polyethylene naphthalate (PEN), polybutylene naphthalate (PBN), or polycarbonate (PC) containing bisphenol A as a main raw material; a polyamide containing an aliphatic diamine such as nylon 6 (PA6), nylon 66 (PA66), nylon 6/66 (PA6/66), nylon 12 (PA12), or hexamethylenediamine and an aromatic dicarboxylic acid such as phthalic acids (terephthalic acid and isophthalic acid) as main raw materials; a polyamide polymer containing an aromatic diamine such as meta-xylenediamine (MXD) and an aliphatic dicarboxylic acid such as adipic acid as main raw materials, such as a polyamide (representative example: PAMXD6); a polyoxymethylene polymer (POM, also referred to as polyacetal polymer); and a polyphenylene ether polymer (PPE) and a polymer alloy modified product thereof (modified PPE; representative example: a polymer alloy of PPE and polystyrene). Among these, PET and PA6 are important as constituent polymers of a multilayer film in terms of versatility and industrial use quantity, and PC, PBT, POM, PPE, and various PAs, which are five major general-purpose engineering plastics, are important in terms of heat resistance and mechanical strength in automotive parts, an electric device (examples: a household electric appliance and a personal computer), plastic parts of portable communication terminals, and the like, and thus the present invention is suitably applied to thermoplastic resin molded bodies using these polymers.

The resin layer 2 in the mixture contains one or more kinds of nonhydrolyzable polymers B as a main component. Examples of the nonhydrolyzable polymers B include a non-condensation polymer. The non-condensation polymer refers to a polymer in which a polymer main chain skeleton synthesized by addition polymerization, coordination polymerization, metathesis polymerization, or the like contains only carbon atoms, and includes a polymer called a vinyl-based polymer or a cycloolefin polymer. Examples thereof include: a polyolefin polymer (PO) such as polyethylene (PE) or polypropylene (PP); a styrene-based polymer such as polystyrene (PS), an acrylonitrile-butadiene-styrene copolymer (ABS), or an acrylonitrile-styrene copolymer (AS or SAN); a (meth)acrylic polymer such as polymethyl methacrylate (PMMA); and an acrylic polymer such as a copolymer of a general-purpose acrylic monomer (for example, a (meth)acrylic compound such as methyl methacrylate, methyl acrylate, ethyl methacrylate, or ethyl acrylate) and an arbitrary radical polymerizable monomer. Among these, PE, PP, and PS are important as constituent polymers of a multilayer film, ABS and AS are widely used industrially as important structural materials positioned between a general-purpose polyolefin and an engineering plastic, and PMMA is widely used industrially as a transparent polymer. Therefore, the present invention is suitably applied to thermoplastic resin molded bodies using these polymers.

Examples of a combination of the hydrolyzable polymer A and the nonhydrolyzable polymer B contained in the mixture include appropriate combinations of the above polymers, and a combination of a polyamide or a polyester with polyethylene or polypropylene is preferable.

In the separation and recovery method of the present invention, occurrence of a hydrolysis reaction of the hydrolyzable polymer A can be adjusted by changing hydrothermal reaction treatment conditions. Therefore, a resin mixture containing the resin layer 1 containing two or more kinds of the hydrolyzable polymers A can be used. For example, in a case of a resin mixture containing the resin layer 1 in which polyethylene terephthalate (PET) and nylon 6 (PA6) are laminated as the hydrolyzable polymer A, or a resin mixture in which PET and PA6 are independently mixed (in a non-laminated state), by selecting hydrothermal reaction treatment conditions in which suitable hydrolysis conditions for PET and PA6 overlap with each other, it is possible to collectively recover hydrolysis products thereof without taking time and effort to sort PET and PA6 in advance.

Each of the resin layer 1 and the resin layer 2 may contain a component other than the polymer.

Examples of the component other than the polymer include: particles and fibers such as glass, carbon fiber, carbon black, silica, titanium oxide, calcium carbonate, magnesium carbonate, magnesium silicate (talc), kaolin, mica, or an organic or inorganic pigment; a plasticizer such as a long chain fatty acid ester such as a phthalate, an adipate, a phosphate, or a stearate; a heat stabilizer such as a hindered phenol-based compound; an ultraviolet absorber such as an amine-based compound; a lubricant such as a long chain fatty acid ester of a polyhydric alcohol such as glycerin; a crystal nucleating agent such as a carboxylate such as sodium benzoate, sodium phthalate, sodium salicylate, sodium 4-hydroxybenzoate, or sodium stearate, or an organic sulfonate such as sodium benzenesulfonate, sodium toluenesulfonate, or sodium 4-hydroxybenzenesulfonate; a mold releasing agent such as a silicone-based compound; and a colorant such as carbon black or various pigments and dyes. The content of these components in each resin layer is not particularly limited, but can be 50 parts by mass or less in total with respect to 100 parts by mass of the polymer.

In addition, the resin layer 1 may be a polymer blend material containing a plurality of kinds of polymer components, and may contain the nonhydrolyzable polymer B as a polymer component in addition to the hydrolyzable polymer A, but usually does not contain the nonhydrolyzable polymer B. Similarly, the resin layer 2 may be a polymer blend material containing a plurality of kinds of polymer components, and may contain the hydrolyzable polymer A as a polymer component in addition to the nonhydrolyzable polymer B, but usually does not contain the hydrolyzable polymer A.

Each of the resin layer 1 and the resin layer 2 is formed of a resin containing the polymer A or the polymer B as a main component.

The mixture, particularly the laminate, may contain, in addition to the resin layer 1 and the resin layer 2, a coating layer C that coats the resin layer 1 or the resin layer 2, an adhesive layer D that bonds the coating layer C to a resin layer, and the like.

Examples of the coating layer C include an appropriate layer depending on use, required characteristics, and the like of the mixture, and include a function-imparting layer that imparts a specific function to the mixture. The function-imparting layer is not particularly limited, and examples thereof include a metal layer that imparts gas barrier properties, aroma retaining properties, light reflectivity, and the like, an inorganic layer as a hard coat that imparts scratch resistance, and a printing layer.

Examples of a material that forms the function-imparting layer include: a metal (a vacuum process such as sputtering or vapor deposition or plating (Examples thereof include inorganic substances such aluminum, silicon, a combination of copper-nickel-chromium, gold, palladium, tin, ruthenium, black trivalent chromium, a transition metal such as a tin-cobalt alloy, and oxides and/or nitrides of these metals. For example, "https://www.tukada-riken.co.jp/products/index.html#wc_anc00001" on the website of Tsukada RIKEN KOGYO K.K. is useful as a reference.)); a ceramic mainly containing a metal oxide such as alumina, silica, zirconia, or titania (used for a hard coat that imparts scratch resistance, an ultraviolet absorbing coat or an antireflection coat to which a transition metal oxide composition is further added, and the like); and an ink (for example, an organic pigment, an inorganic pigment, a dye, a vinyl chloride resin, or a vinyl acetate resin). A plurality of kinds of the function-imparting layers may be used in an arbitrary combination in a form of a laminated structure.

The adhesive layer is a layer that bonds layers constituting the mixture, the coating layer, and the like to each other, and an adhesive component is not particularly limited and is appropriately selected.

Examples of a combination of the polymer A or B with a material forming the coating layer C or the adhesive layer D include appropriate combinations of the above polymer and materials. The present invention is preferably applied to those having a large industrial use quantity, for example, (1) those obtained by laminating, as a heterogeneous multilayer film, the polymer A (representative examples: PET and PA6) on the polymer B such as PE, PP, or PS as a base material, and then laminating a printing layer, a barrier layer (aluminum layer, silica layer, alumina layer, vinylidene chloride layer, or the like) that blocks oxygen and water, an antistatic layer, an adhesive layer that bonds different kinds of films, an antiblocking layer, or the like thereon as the coating layer C and the adhesive layer D, (2) those obtained by coating a molded article (preferably produced by injection molding or extrusion molding) of the five major general-purpose engineering plastics (PC, PBT, POM, PPE, and various PAs) with the above metal or ceramic, and (3) those obtained by coating a large molded article (Examples: automotive parts and home appliance housing) of the polymer B such as PP or ABS with the above ink or ceramic.

In the mixture containing the function-imparting layer, a ratio (mass ratio) between the mixture, and the function-imparting layer and the adhesive layer is not particularly limited, and can be appropriately set, but usually can be set to, for example, mixture : (function-imparting layer and adhesive layer) = 100 : 1 to 100 : 0.001 (mass ratio).

As the mixture, in addition to an unused mixture, a waste plastic (a waste or a recovered material such as a used molded article, a molded defective product, or a molded residue) or the like can be used, and in particular, use of a waste plastic contributes to circulation of carbon resources and conservation of the global environment. The waste plastic is not particularly limited, and examples thereof include: a plastic automobile part (a chassis, an interior, an outer layer, a window glass portion, an illumination unit such as a headlamp cover or a reflector, a side mirror, a display unit, a safety mechanism such as a safety belt, an airbag, or an airbag cover, a fuel system mechanism such as a tank, a pipe, or a pump, an electric wiring mechanism such as a connector, a mechanical mechanism such as a gear, and the like); a plastic part of an electric device (examples: a household electric appliance and a personal computer) or a portable communication terminal (a housing, a display part, an electric circuit board, an antenna, or the like); various optical disks; a plastic part of a medical and health instrument (a bag for artificial dialysis or infusion, a disposable syringe, a physical training device, or the like); various molded articles such as a container, a packaging tray, stationery, a toy, furniture, daily necessities, and a household electric appliance housing; a packaging film (including: packaging of a pharmaceutical such as a tablet, a powder, or a liquid); and shopping bags. Among these, when the present invention is suitably used for wastes derived from a large number of automobile parts, electric devices, and portable communication terminals, various optical disks, packaging films, or the like, recycling of multilayer plastic films (multilayer plastic laminates) to be discarded in large amounts can be promoted.

The mixture is used as a melt in the decomposition and separation step in the separation and recovery method of the present invention. The "melt" as used herein means a mixture in which at least a part of a polymer as a constituent component of the mixture is melted to be in a viscous flowable state. In order to form the mixture into a melt, a temperature condition exceeding softening points (for example, a melting point or a glass transition temperature) of at least some of the polymers as constituent components of the mixture is required. Such a melt may contain a polymer component that is not melted as long as it is in a viscous flowable state. When hydrolysis of the polymer is promoted, the polymer in a solid state is preferably brought into a molten state, and therefore a temperature at which the mixture is formed into a melt is preferably a temperature condition exceeding a softening point of the hydrolyzable polymer A. At the same time, an excessive high temperature may cause thermal deterioration (examples: pyrolysis, oxidation, transfer reaction, and crosslinking reaction) of the polymer in a molten state. Therefore, it is preferable to select a temperature condition capable of suppressing thermal deterioration of the nonhydrolyzable polymer B. In addition, it is considered that lowering of a viscosity of the melt as the temperature rises promotes hydrolysis of the hydrolyzable polymer A by a mechanism of increasing an interface area and interface update efficiency of a hydrolysis reaction between an aqueous phase and the polymer.

The mixture can be subjected to the decomposition and separation step as it is (without being subjected to pretreatment). However, when the mixture contains a solid component or the like that does not melt under hydrothermal reaction treatment conditions, the mixture is preferably subjected to the decomposition and separation step as a molten mixture obtained by removing the solid component from the previously molten melt. This makes it possible to reduce a residual solid component in a recovered polymer and to suppress generation of undesirable chemical reactions and by-products derived from the solid component. Therefore, the high-purity hydrolytic component a and the nonhydrolyzable polymer B can be separated and recovered with higher recycling efficiency. The solid component contained in the mixture is a component that does not melt but exists as a solid under a condition (temperature) for melting the mixture, for example, at 150 to 350°C. A lower limit temperature thereof is preferably 190°C and more preferably 220°C in terms of a melt viscosity of the melt, and an upper limit temperature thereof is preferably 340°C and more preferably 330°C in terms of suppressing thermal deterioration. Examples of the solid component include paper such as a label and various inorganic substances.

The condition for melting the mixture is set to a temperature equal to or higher than a softening point of a polymer contained in the mixture and lower than a thermal decomposition temperature thereof as described above, and examples thereof include the temperature at which the mixture is melted. As a method of removing the solid component from the melt of the mixture, an ordinary method can be applied without particular limitation, and examples thereof include solid-liquid separation such as filtration.

As the mixture used in the separation and recovery method of the present invention, a mixture in which a molded body of a resin containing a thermoplastic polymer and a molded body of a resin containing a non-thermoplastic polymer is mixed in the above-described mixture may be used. In particular, when a mixture derived from a waste plastic is used, mixing of a molded body other than the above-described mixture is advantageous in that it is not necessary to sort the waste plastic in advance. In addition, when a mixture derived from a waste plastic is used, for example, a mixture in which a paper or plastic label, an inner lid of a cap, or the like are mixed can also be used.

### <Decomposition and separation step>

In the separation and recovery method of the present invention, the mixture is subjected to a hydrothermal reaction treatment (a decomposition and separation step is performed). In the hydrothermal reaction treatment, the mixture becomes a melt, and in some cases, becomes a molten mixture, the hydrolyzable polymer A in the mixture (molten mixture) can be hydrolyzed and separated, and the nonhydrolyzable polymer B in the mixture (molten mixture) can be separated while maintaining a molecular weight thereof (usually in a molten state). At the time of this separation, it is preferable to avoid precipitation of the hydrolytic component a of the hydrolyzable polymer A as a solid from a viewpoint that the hydrolytic component a and the nonhydrolyzable polymer B can be separated from each other simply with high purity.

In the present invention, avoiding precipitation of the hydrolytic component a as a solid means that by heating the system under hydrothermal reaction treatment conditions, the solubility of at least one kind of hydrolytic component a in water at a high temperature is increased, whereby the hydrolytic component a is preferably dissolved (transferred) into an aqueous phase under the hydrothermal treatment conditions, and is not precipitated in a solid form as crystals, aggregates, or the like in the system. Here, it is only required that precipitation of the hydrolytic component a can be suppressed to such an extent that a recovery ratio satisfies a range described later.

The decomposition and separation step (hydrothermal reaction treatment) is performed by heating and mixing the mixture and water. Water is not particularly limited, and in addition to deionized water, reverse osmosis water, distilled water, and purified water, well water, tap water, industrial water, and the like can be used.

The amount of water used is appropriately determined depending on the kind of each polymer, content ratios of the polymer A and the polymer B, the hydrothermal reaction treatment conditions, or the like, and is 300 to 5000 parts by mass with respect to 100 parts by mass of the mixture.

The hydrothermal reaction treatment conditions are set to a temperature equal to or higher than a temperature at which a hydrolysis reaction of the hydrolyzable polymer A proceeds and a temperature equal to or higher than a melting temperature of the nonhydrolyzable polymer B and lower than a decomposition temperature thereof (particularly a temperature at which a decomposition reaction can be suppressed and a molecular weight can be maintained) under a pressure of 101 kPa (1 atm) or more, and are appropriately selected depending on the kind of each polymer, a combination of the coexisting polymer A and polymer B, or the like.

For example, the temperature (treatment temperature) of the hydrothermal reaction treatment can be set to 250°C or higher, is preferably 275°C or higher, and is more preferably 300°C or higher. An upper limit of the treatment temperature is, for example, preferably 390°C or lower, more preferably 375°C or lower, still more preferably 350°C or lower, and particularly preferably 330°C or lower.

The treatment temperature can be appropriately set from the above range depending on the kinds of the hydrolyzable polymer A and the nonhydrolyzable polymer B, or the like. For example, when the polymer A is polyesters, particularly polyethylene terephthalate, the treatment temperature is preferably 250 to 350°C and more preferably 300 to 325°C from a viewpoint that recycling efficiency of the hydrolyzable polymer A can be enhanced while a reaction for reducing a molecular weight of the nonhydrolyzable polymer B is suppressed. When the polymer A is polyamides, particularly nylon, the treatment temperature is preferably 300°C or higher. Meanwhile, when the polymer B is a polyolefin polymer, particularly polyethylene and polypropylene, the treatment temperature is preferably 250 to 330°C from a viewpoint that a reaction for reducing a molecular weight can be suppressed, and when the polymer B is polypropylene, the treatment temperature is more preferably 250 to 300°C. When a combination of the hydrolyzable polymer A and the nonhydrolyzable polymer B is polyesters or polyamides and a polyolefin polymer, a suitable aspect of the treatment temperature is 300 to 350°C, and may be 300 to 325°C.

Time (treatment time) of the hydrothermal reaction treatment is preferably as short as possible as long as the hydrothermal reaction treatment sufficiently proceeds. For example, a lower limit of the treatment time is preferably one minute or more, but may be three minutes or more, eight minutes or more, ten minutes or more, or fifteen minutes or more. An upper limit of the treatment time is preferably as short as possible, and is, for example, more preferably 90 minutes or less, and still more preferably 60 minutes or less from a viewpoint of reducing deterioration of the nonhydrolyzable polymer B. Furthermore, the treatment time can be 40 minutes or less or 30 minutes or less.

The treatment time can also be appropriately set from the above range depending on the kinds of the hydrolyzable polymer A and the nonhydrolyzable polymer B, or the like. For example, when the hydrolyzable polymer A is polyesters (particularly polyethylene terephthalate) or polyamides and when the nonhydrolyzable polymer B is a polyolefin polymer (particularly polyethylene), the treatment time is preferably 15 to 60 minutes from a viewpoint that a reaction for reducing a molecular weight of the nonhydrolyzable polymer B can be suppressed. When the hydrolyzable polymer A is polyesters (particularly polyethylene terephthalate) and when the nonhydrolyzable polymer B is a polyolefin polymer (particularly polyethylene and polypropylene), the treatment time is more preferably 30 minutes or less, and when the hydrolyzable polymer A is polyamides, the treatment time is more preferably 30 to 60 minutes.

The hydrothermal reaction treatment conditions are preferably set to a treatment temperature and a treatment time included in a quadrangular region (including a boundary line) having a point A1 (1,390), a point 2 (1,250), a point 3 (60,250), and a point 4 (60,375) as vertices in an orthogonal coordinate system in which an x axis represents the treatment time (minute) and a y axis represents the treatment temperature (°C) under a pressure of 101 kPa or more from a viewpoint that the hydrolyzable polymer A can rapidly undergo a hydrolysis reaction while a reaction for reducing a molecular weight of the nonhydrolyzable polymer B is suppressed to further enhance recycling efficiency.

A more preferable aspect is an aspect of setting the hydrothermal reaction treatment conditions to a treatment temperature and a treatment time included in a quadrangular region (including a boundary line) having a point A (1, 375), the point 2 (1, 250), the point 3 (60, 250), and the point 4 (60, 375) as vertices or an aspect of setting the hydrothermal reaction treatment conditions to a treatment temperature and a treatment time included in a quadrangular region (including a boundary line) having the point A1 (1, 390), a point B (1, 325), a point C (60, 275), and a point D (60, 300) as vertices.

A still more preferable aspect is an aspect of setting the hydrothermal reaction treatment conditions to a treatment temperature and a treatment time included in a quadrangular region (including a boundary line) having the point A (1, 375), the point B (1, 325), the point C (60, 275), and the point D (60, 300) as vertices, and a particularly preferable aspect is an aspect of setting the hydrothermal reaction treatment conditions to a treatment temperature and a treatment time included in a quadrangular region (including a boundary line) having a point E (5, 350), a point F (15, 325), the point C (60, 275), and the point D (60, 300) as vertices.

In the present invention, regarding the combination of the treatment temperature and the treatment time, in addition to the combinations of the treatment temperature and the treatment time included in the above regions, the following combination is also one of preferable aspects when the kinds of the hydrolyzable polymer A and the nonhydrolyzable polymer B are focused on.

That is, when the hydrolyzable polymer A is polyesters (particularly polyethylene terephthalate), it is preferable to set the hydrothermal reaction treatment conditions to a treatment temperature and a treatment time included in a pentagonal region (including a boundary line) having a point a (5, 350), a point b (5, 325), a point c (10, 300), a point d (60, 250), and a point e (60, 350) as vertices, and it is more preferable to set the hydrothermal reaction treatment conditions to a treatment temperature and a treatment time included in a quadrangular region (including a boundary line) having a point f (15, 350), a point g (15, 300), the point d (60, 250), and the point e (60, 350) as vertices.

When the hydrolyzable polymer A is polyamides, it is preferable to set the hydrothermal reaction treatment conditions to a treatment temperature and a treatment time included in a quadrangular region (including a boundary line) having the point A1 (1, 390), the point 2 (1, 250), the point D (60, 300), and the point e (60, 350) as vertices, and it is more preferable to set the hydrothermal reaction treatment conditions to a treatment temperature and a treatment time included in a quadrangular region (including a boundary line) having the point D (60, 300), the point e (60, 350), the point f (15, 350), and the point F (15, 325) as vertices.

Meanwhile, when the polymer B is a polyolefin polymer (particularly polyethylene (LDPE or LLDPE)), it is preferable to set the hydrothermal reaction treatment conditions to a treatment temperature and a treatment time included in a pentagonal region (including a boundary line) having a point h (2, 350), a point i (2, 300), a point j (15, 250), the point d (60, 250), and a point k (60, 330) as vertices, and it is more preferable to set the hydrothermal reaction treatment conditions to a treatment temperature and a treatment time included in a quadrangular region (including a boundary line) having a point I (15, 330), the point j (15, 250), the point d (60, 250), and the point k (60, 330) as vertices. When the polymer B is a polyolefin polymer (particularly polypropylene), it is preferable to set the hydrothermal reaction treatment conditions to a treatment temperature and a treatment time included in a quadrangular region (including a boundary line) having a point m (2, 330), a point n (2, 250), the point d (60, 250), and the point k (60, 330) as vertices, and it is more preferable to set the hydrothermal reaction treatment conditions to a treatment temperature and a treatment time included in a quadrangular region (including a boundary line) having a point p (2, 300), the point n (2, 250), a point q (30, 250), and a point r (30, 330) as vertices.

Note that, in the present invention, the vertexes of each of the above-described polygons indicating a combination of a treatment temperature and a treatment time can be appropriately changed to points indicating a combination of a treatment temperature and a treatment time in Examples described later to form a new polygon.

Since in the separation and recovery method of the present invention, a water absorption treatment and a heating pretreatment described later are performed, a treatment temperature in the hydrothermal reaction treatment can be set to be lower than the above treatment temperature. For example, a lower limit value of the treatment temperature can be set to 200°C, and a lower limit value of the treatment temperature in each of the above temperature ranges and each of the above regions can be set to 200°C.

A pressure under the hydrothermal reaction treatment conditions is equal to or higher than a water vapor pressure (for example, 101 kPa at 100°C and 12.86 MPa at 330°C) at a treatment temperature up to a critical temperature of water, and is usually set to a pressure of 101 kPa or higher, and is, for example, equal to or higher than a critical pressure of 22.1 MPa at a treatment temperature equal to or higher than the critical temperature. An upper limit of the pressure at a treatment temperature equal to or higher than the critical temperature is not particularly limited, and can be, for example, the critical pressure + 40 MPa or less.

The hydrothermal reaction treatment is preferably performed in the absence of an acid or a base from a viewpoint of workability and elimination of need for post-treatment, but for the purpose of improving a recovery ratio of the hydrolytic component a, the hydrothermal reaction treatment can also be performed in the presence of an acid or a base, and in this case, the hydrothermal reaction treatment is preferably performed in the presence of a base. Here, the absence of an acid or a base means that an acid or a base is not actively used, and a pH of water with which a mixture is brought into contact is in a range of 6 to 8.

The acid is not particularly limited, and examples thereof include an organic acid such as acetic acid, and an inorganic acid such as hydrochloric acid, nitric acid, phosphoric acid, or sulfuric acid. The base is not particularly limited, and examples thereof include an organic base such as an alkyl ammonium salt, an inorganic base such as a metal hydroxide, and ammonia water.

A use amount of each of the acid and the base is not particularly limited, and is appropriately determined.

An atmosphere (environment) under the hydrothermal reaction treatment conditions is not particularly limited, and may be, for example, the atmospheric air (atmospheric environment) under the above pressure. The atmosphere (environment) is preferably an oxygen gas-absent environment, for example, in dry air or an inert gas (for example, an argon gas, a helium gas, or a nitrogen gas) from a viewpoint that the nonhydrolyzable polymer B can be recovered at a high molecular weight maintaining ratio while a reaction for reducing a molecular weight of the nonhydrolyzable polymer B is suppressed. In particular, when the amount of oxygen in the system, specifically, dissolved oxygen in water to be used for the hydrothermal reaction treatment is reduced by the oxygen gas-absent environment, the reaction for reducing a molecular weight of the nonhydrolyzable polymer B can be effectively suppressed.

The hydrothermal reaction treatment (decomposition and separation step) is usually performed in a sealed state, and can be performed by a batch method or by a continuous method. Examples of a reaction container used in the batch method include a sealed reaction container, for example, an autoclave and a reaction tube.

In the separation and recovery method of the present invention, by performing the hydrothermal reaction treatment preferably under the above hydrothermal reaction treatment conditions, the mixture may be first melted, and in some cases, may become a molten mixture that is not compatible with water.

Simultaneously with or after melting of the mixture, the hydrolyzable polymer A undergoes a hydrolysis reaction to generate the hydrolytic component a. The hydrolytic component a is separated from the mixture, and the hydrolytic component a exhibiting water solubility is transferred to an aqueous phase. The hydrolytic component a is a compound generated depending on the kind of the hydrolyzable polymer A, and is usually a raw material compound (monomer) that forms the hydrolyzable polymer A or a multimer thereof. Examples of the hydrolytic component a preferably include a raw material compound (monomer) of a polyamide, a polyester, a polycarbonate, or the like, and more preferably include one or more kinds of components selected from the group consisting of terephthalic acid, 2,6-naphthalenedicarboxylic acid, ethylene glycol, 1,3-propanediol, 1,4-butanediol, tetrahydrofuran, aminocaproic acid, ε-caprolactam, hexamethylenediamine, adipic acid, and derivatives thereof, from a viewpoint of industrial importance. Here, the "derivatives thereof" refer to compounds generated by the hydrolytic component a generated by hydrolysis of the hydrolyzable polymer A further undergoing a reaction and the like under hydrolysis conditions, and are determined by the hydrolytic component a, the hydrolysis conditions, or the like.

Meanwhile, progress of a decomposition reaction of the nonhydrolyzable polymer B is effectively suppressed during melting of the mixture and in the hydrothermal reaction treatment after the melting, and the nonhydrolyzable polymer B present in the resin layer 2 is separated from an aqueous phase (mixture) in a molten state while maintaining a molecular weight of the nonhydrolyzable polymer B.

With progress of the hydrothermal reaction treatment, the hydrolyzable polymer A becomes the hydrolytic component a, and the hydrolytic component a exhibiting water solubility further moves to an aqueous phase and is separated from the nonhydrolyzable polymer B in a molten state. After the separation in such a molten state, the nonhydrolyzable polymer B is cooled and solidified to be recovered. When the nonhydrolyzable polymer B is recovered, a pelletizing method by melt extrusion is preferably used.

In the separation and recovery method of the present invention, a recovery ratio of the hydrolytic component a varies depending on changes in the kind of the hydrolyzable polymer A, the hydrothermal reaction treatment conditions, or the like, but for example, when the hydrolyzable polymer A contained in the resin layer 1 is 100%, a recovery ratio (molar basis) of 60% or more can be achieved, and a high recovery ratio of 70% or more, or 80% or more can be achieved. Similarly, a recovery ratio of the nonhydrolyzable polymer B varies depending on changes in the kind of the nonhydrolyzable polymer B, the hydrothermal reaction treatment conditions, or the like, but for example, when the nonhydrolyzable polymer B contained in the resin layer 2 is 100%, a recovery ratio (molar basis) of 80% or more can be achieved, and a high recovery ratio of 90% or more can be achieved.

The recovered nonhydrolyzable polymer B favorably maintains a molecular weight distribution of the nonhydrolyzable polymer B present in the resin layer 2. A behavior of the molecular weight distribution of the recovered nonhydrolyzable polymer B is not unique depending on the kind of the polymer B, the hydrothermal reaction treatment conditions, or the like. In the separation and recovery method of the present invention, the recovered nonhydrolyzable polymer B maintains an average molecular weight of 0.7 times or more an average molecular weight of the nonhydrolyzable polymer B before the hydrothermal reaction treatment (molecular weight maintaining ratio of 70% or more), and can also maintain an average molecular weight of 0.8 times or more (molecular weight maintaining ratio of 80% or more) by optimizing the treatment conditions. When the recovered nonhydrolyzable polymer B exhibits a molecular weight maintaining ratio in the above range, performance inherent in the nonhydrolyzable polymer B can be maintained, and recycle of the recovered nonhydrolyzable polymer B into a molded article or the like can be further promoted.

In the present invention, an average molecular weight of a polymer is a value measured by a method described in Examples described later. Note that the average molecular weight of the nonhydrolyzable polymer B present in the resin layer 2 is defined as an average molecular weight of the nonhydrolyzable polymer B taken out from the resin layer 2 of the mixture before the hydrothermal reaction treatment.

Each of the recovered hydrolytic component a and nonhydrolyzable polymer B can be appropriately purified by an ordinary method.

### <Other steps>

In the separation and recovery method of the present invention, a step other than the decomposition and separation step can be performed before or after the decomposition and separation step. Examples thereof include a step of melting the mixture in advance, a step of removing a solid component from a melt of the mixture described above, a step of sorting the mixture according to, for example, the kind of a contained polymer, a step of washing the mixture to reduce contaminant components in advance, a step of purifying the recovered hydrolytic component a and nonhydrolyzable polymer B, a step of drying the nonhydrolyzable polymer, and a step of granulating (pelletizing) the nonhydrolyzable polymer. As a purification method and the like, various known methods can be applied without particular limitation.

Among these steps, the separation and recovery method of the present invention preferably further includes the step of melting the mixture in advance before the decomposition and separation step from a viewpoint of recycling efficiency. The step of melting the mixture in advance is a step of kneading the mixture in a molten state using, for example, an extruder, and a known machine can be used. The machine to be used is not limited, and for example, an extruder having a short shaft or a plurality of shafts, or a gear pump can be used. A condition for melting the mixture is not particularly limited as long as it is a condition for melting the mixture, but a set temperature is preferably 100°C or higher, more preferably 200°C or higher, and still more preferably 260°C or higher from a viewpoint of uniformity of a melt. The set temperature is preferably 350°C or lower, more preferably 300°C or lower, and still more preferably 280°C or lower from a viewpoint of suppressing decomposition and deterioration of a polymer in the melt. Here, the set temperature is a set temperature of an extruder or the like.

In a case of including a melt-kneading step (step of melting the mixture in advance) before the decomposition and separation step, a higher treatment temperature (heating temperature) can be applied as the hydrothermal reaction treatment conditions as compared with the temperature in the separation and decomposition step, and in addition, the treatment time can be shortened by including the melt-kneading step. That is, the treatment temperature is set to a temperature equal to or higher than the highest melting point of polymers contained in the mixture and lower than the lowest decomposition temperature thereof, and the temperature range is generally 100 to 350°C. The treatment temperature is preferably equal to or higher than a melting point of a polymer having the highest melting point and equal to or lower than the melting point + 50°C, and more preferably equal to or higher than the melting point + 10°C and equal to or lower than the melting point + 30°C. Specifically, when the polymer having the highest melting point is PA6, the treatment temperature is preferably 230 to 280°C and more preferably 240 to 260°C, when the polymer having the highest melting point is PA6/66, the treatment temperature is preferably 200 to 250°C and more preferably 210 to 230°C, and when the polymer having the highest melting point is PA66 or PET, the treatment temperature is preferably 250 to 300°C and more preferably 260 to 280. The treatment time (heating time) is not particularly limited, but there is a high possibility that thermal decomposition of a polymer proceeds by prolonging the treatment time. In view of this, it is desirable to shorten the treatment time within a feasible range.

The step of purifying the recovered hydrolytic component a and nonhydrolyzable polymer B is not particularly limited, and a purification step usually adopted can be applied depending on the kind of the hydrolytic component a, the kind of the nonhydrolyzable polymer B, or the like. For example, when the hydrolytic component a is a carboxylic acid compound, an amine compound, or the like, examples of the purification step include purification by an acid-base treatment.

In the separation and recovery method of the present invention, a pretreatment (referred to as a heating pretreatment) is preformed while the mixture subjected to a water absorption treatment (water absorption state) is heated before the decomposition and separation step (before a step of melting the mixture in advance in a case where the step of melting the mixture in advance is included) from a viewpoint that a recovery ratio can be expected to be improved while a progress of the decomposition reaction of the nonhydrolyzable polymer B is effectively suppressed, and furthermore, from a viewpoint that the hydrothermal reaction treatment can be performed under milder conditions (lowering the treatment temperature, shortening the treatment time, reducing a water use amount, or the like). The improvement of the recovery ratio is remarkable when the hydrolyzable polymer A is polyesters, polyamides, or the like.

The hydrolyzable polymer A contained in the mixture to be subjected to the hydrothermal reaction treatment generally has a hydrolyzable chemical bond such as an ester bond, an amide bond, or a carbonate bond in a repeating unit structure of a polymer main chain, and therefore has a property (water absorbability) of accepting hydration to such a hydrolyzable chemical bond and coordination of water molecules in the vicinity thereof. Therefore, an idea has been reached in which by performing such water absorption treatment and heating pretreatment at a preceding stage of the hydrothermal reaction treatment in the present invention, hydrolysis can proceed to some extent, therefore conditions (temperature, time, and use amount) for the hydrothermal reaction treatment intended to hydrolyze a polymer to a monomer can be reduced, and as a result, deterioration of the nonhydrolyzable polymer B intended for material recycling can be suppressed.

In this idea, in order to effectively hydrolyze the hydrolyzable polymer A in the heating pretreatment, the hydrolyzable polymer A needs to be in a water absorption state to such an extent that an effect thereof is sufficiently exhibited. Conditions of the water absorption treatment for achieving such a water absorption state are desirably a low temperature and/or a short time from a viewpoint of reducing deterioration (due to heat or oxidation) of the coexisting nonhydrolyzable polymer B or industrial productivity (reduction of energy cost and required time, and the like). By such a water absorption treatment, it is preferable to bring the hydrolyzable polymer A close to a saturated water absorption state. In order to achieve such a preferable water absorption state, it is preferable to increase an area where the hydrolyzable polymer A is in contact with water, that is, an area where water molecules permeate and/or react.

In terms of the water permeability and/or reactivity, when the hydrolyzable polymer A forms a laminate with the nonhydrolyzable polymer B having low water permeability, an area that can come into contact with water is limited, and hydrolysis of the hydrolyzable polymer A is suppressed. Examples thereof include a laminate with polyethylene (PE), polypropylene, or the like, which is the nonhydrolyzable polymer B having low water permeability. In particular, in a case where the laminate includes a structure ("sandwich type") sandwiched between the nonhydrolyzable polymers B having low water permeability, for example, a three-layer structure of PE/hydrolyzable polymer A/PE (also referred to as a "B/A/B structure"), front and back surfaces of the laminate are made of PE. Therefore, water absorption or hydrolysis of the hydrolyzable polymer A is limited except for end surfaces.

### (Mechanical treatment)

Therefore, by applying a mechanical treatment (application of a stress element such as tension, bending, compression, or shearing, for example, a means of splitting, piercing, cutting, or polishing) to the hydrolyzable polymer A, a contact area with water in scratches, perforations, end surfaces, or the like can be increased, a water absorption rate and a water absorption amount can be improved, and hydrolysis can be further progressed in the heating pretreatment. The mechanical treatment can be performed under appropriate conditions, and also can be performed before the water absorption treatment described later and/or simultaneously with the water absorption treatment. Since the mechanical treatment is intended to increase a contact area with water in a stage of the heating pretreatment described later, it is desirable to perform the mechanical treatment under conditions and in a step stage that can effectively achieve the increase in the contact area. For example, when a mixture containing polyamides (for example, PA6) whose toughness (softening) tends to be increased by water absorption is used as a starting raw material, a multilayer film may be effectively damaged by applying the mechanical treatment before a water absorption ratio is excessively increased.

By applying the mechanical treatment to the mixture before the water absorption treatment described later, water can be easily brought into contact with the mixture, usually the hydrolyzable polymer A, and hydrolysis of the hydrolyzable polymer A can be promoted.

The mechanical treatment is not particularly limited, but for example, a shredder or a pulverizer may be used.

It is preferable to increase a "water entry route or a hydrolysis reaction portion in flaws, perforations, end surfaces, or the like" newly generated by the mechanical treatment as an area where the hydrolyzable polymer A is newly exposed (hereinafter, referred to as "new exposed area") in terms of effectiveness of the water absorption treatment described later in detail.

Such a new exposed area can be calculated by multiplying the length of a flaw, a perforation, an end surface, or the like of the mixture such as a multilayer film in a plane direction (an outer peripheral length of a hole in a case of the perforation) by a thickness. However, as a quantitative effectiveness evaluation index assuming that the thickness of the mixture is uniform, an increase magnification of the above "length of a flaw, a perforation, an end surface, or the like" (hereinafter, referred to as "end surface increase magnification") can be used. For example, regarding an effect of a cutout dimension of a film in Example A-3 described later, as a result of cutting a film having a size of 50 mm × 50 mm into 100 fragments each having a size of 5 mm × 5 mm by the mechanical treatment, an end surface area can be considered to have increased by 10 times, and thus an end surface increase magnification in this case is 10 times.

For example, in a case where the mixture as a treatment target is finely crushed or has a large number of flaws, there is a possibility that it is determined that there is no need to newly perform the mechanical treatment in consideration of an increase in the number of steps (that is, an increase in time and cost), but such an end surface increase magnification is set to usually 1.1 times or more, preferably 2 times or more, and more preferably 10 times or more. Such an end surface increase magnification is evaluated by selecting, observing, and measuring a representative portion in a given sample, but an average value obtained by evaluating a plurality of portions may be adopted as necessary.

### (Water absorption treatment)

Examples of the water absorption treatment include a method of exposing the mixture to liquid water or a water vapor atmosphere at an arbitrary temperature and pressure different from those of the hydrothermal reaction treatment and causing the mixture to stay in an appropriate container, and a temperature condition thereof can be usually set to 0 to 150°C. A lower limit temperature is preferably 20°C and more preferably 50°C from a viewpoint of water absorption efficiency, and an upper limit temperature is preferably 120°C and more preferably 100°C from a viewpoint of reduction of deterioration of the coexisting nonhydrolyzable polymer B or industrial productivity. Time for such a water absorption treatment (average stay time in a case of a continuous type) is usually one minute to 24 hours, but when the mixture can be stored in a storage tank such as a silo for a long period of time exceeding 24 hours, a sufficient water absorption state can be reached in such a storage tank. A lower limit of the time for the water absorption treatment depends on the shape or dimensions of the mixture, but is preferably five minutes and more preferably ten minutes from a viewpoint of ensuring an effective water absorption ratio, and an upper limit thereof is preferably 18 hours and more preferably 12 hours from a viewpoint of reducing deterioration (due to heat or oxidation) of the coexisting nonhydrolyzable polymer B or industrial productivity.

In a case of exposure to water in the water absorption treatment, it is preferable to immerse the mixture in water. A relative humidity when the mixture is exposed to water (water vapor) is most preferably 100%.

In the water absorption treatment, when the mixture is exposed to liquid water, as for the amount of water to be used, water of the number of moles at which the hydrolyzable polymer A contained in the mixture as a treatment target reaches a saturated water absorption state is required, but an excess amount of water with respect to the number of moles is usually used from a viewpoint of kinetics of rapidly promoting such water absorption. Specifically, water having a mass 0.5 to 100 times the mass of the hydrolyzable polymer A can be used. A lower limit thereof is preferably one time and more preferably five times when certain fluidity is required in terms of industrial processes such as transportability and transferability of a treatment target (example: water slurry). Meanwhile, an upper limit thereof is preferably 50 times and more preferably 10 times in terms of economic rationality for minimizing the amount of water used.

In this way, the mixture is taken out of the water excessively used as necessary to allow the hydrolyzable polymer A to absorb water, thus obtaining a mixture in a water absorption state. Here, since the nonhydrolyzable polymer usually hardly absorbs water, the mixture in a water absorption state means that the hydrolyzable polymer A is in a water absorption state. Regarding a water absorption amount at this time, it is preferable to allow the hydrolyzable polymer A to absorb water up to about a known saturated water absorption ratio in water. Such a saturated water absorption ratio in water varies depending on measurement conditions (sample shape, sample molding conditions, water temperature, or the like), but as representative values of various polymers obtained by a general molding method such as injection molding or film molding, 10 to 11 mass% of PA6, 8 to 10 mass% of PA66, 11 to 12 mass% of a PA6/66 copolymer, 6 to 10 mass% of PAMXD6, 0.4 to 0.6 mass% of PET, and 0.4 to 0.6 mass% of PBT can be exemplified. Actually, saturated water absorption samples of various polymers in Examples described later are at the levels of such representative values. The water absorption amount is most preferably the saturated water absorption ratio of the hydrolyzable polymer A. However, this cannot be applied sweepingly, and the water absorption amount varies depending on the kind of the hydrolyzable polymer A, temperature, or the like. For example, the water absorption amount is preferably 1/10 to 1/1 of the saturated water absorption ratio.

An apparatus for performing the water absorption treatment is not limited, and either a batch type or a continuous type can be used.

The water absorption treatment is usually performed as a pre-stage of the heating pretreatment. Note that it is also possible to promote water absorption at the stage of the heating pretreatment. Examples thereof include a process of introducing high-temperature water vapor into an apparatus as a temperature raising means in the heating pretreatment to perform water absorption.

### (Heating pretreatment)

The mixture that has absorbed water as described above is heated before being subjected to the hydrothermal reaction treatment (heating pretreatment). This heating pretreatment is different from the hydrothermal reaction treatment described above in that the mixture in a water absorption state is heat-treated. That is, the heating pretreatment is intended to promote hydrolysis by moisture incorporated into the hydrolyzable polymer A by the water absorption treatment, and the heating pretreatment is not a treatment in which the mixture is mixed with an excessive amount (for example, 100 parts by mass or more with respect to 100 parts by mass of the mixture) of water and heated as in the hydrothermal reaction treatment, but is a treatment in which the mixture in a water absorption state is preferably heated as it is without being mixed with water.

In this heating pretreatment, it is preferable to select a condition and/or an apparatus that do not excessively promote detachment (drying) of water from the mixture (hydrolyzable polymer A) in a water absorption state. This is because water molecules absorbed by a hydrophilic chemical bond (examples: an amide bond and an ester bond) contained in the hydrolyzable polymer A or the vicinity thereof are a source of hydrolysis of the chemical bond, and therefore it is preferable in principle not to reduce the amount of the water. From this principle, effectiveness of the heating pretreatment is influenced by three factors of a water absorption ratio of the hydrolyzable polymer A, reaction time, and temperature. Therefore, factors in terms of apparatus (example: stirring) are collateral. An apparatus for performing the heating pretreatment is not limited, and a batch type or continuous type apparatus can be used.

A temperature range of the heating pretreatment is usually 120°C to 350°C, and a lower limit temperature thereof is preferably 150°C and more preferably 200°C in terms of a hydrolysis effect. Meanwhile, in terms of suppressing thermal deterioration of the nonhydrolyzable polymer B, an upper limit temperature thereof is preferably 300°C, and more preferably a temperature condition (approximately 220°C to 270°C, that is, a temperature range in which the main hydrolyzable polymer A such as a polyester or a polyamide can flow) in the vicinity of a softening point of the polymer in which thermal mobility of a polymer chain of the hydrolyzable polymer A increases.

Time for the heating pretreatment (average stay time in a case of a continuous type) is usually one minute to 12 hours, although depending on selection of the treatment temperature. A lower limit thereof is preferably five minutes and more preferably ten minutes in terms of sufficiently progressing hydrolysis, and an upper limit thereof is preferably six hours and more preferably three hours in terms of reducing deterioration of the coexisting nonhydrolyzable polymer B or industrial productivity. In a case where storage for a long time exceeding 12 hours is possible by a process design with which the heating pretreatment is performed in a storage tank such as a silo, the heating pretreatment can also be performed in such a storage tank. In the case of such long-time storage, it is preferable to select a relatively low temperature range from a viewpoint of reduction of thermal deterioration of the nonhydrolyzable polymer B and energy cost.

The mixture that has been subjected to the heating pretreatment may be temporarily cooled and taken out, or may be continuously subjected to the above-described hydrothermal reaction treatment as it is by adding necessary water or the like.

By subjecting the mixture to be subjected to the hydrothermal reaction treatment to the water absorption treatment and the heating pretreatment described above, hydrolysis of the hydrolyzable polymer A of the mixture to be subjected to the hydrothermal reaction treatment can be promoted, conditions of the hydrothermal reaction treatment to be performed thereafter can be made mild, and deterioration of the nonhydrolyzable polymer B can be suppressed. In addition, it is also possible to reduce the amount of water to be used in the hydrothermal reaction treatment described above.

### EXAMPLES

Hereinafter, the present invention will be described in more detail based on Examples, but the present invention is not to be construed in a limited manner by these Examples. Examples which are outside the scope of the claims are provided purely as reference examples.

### [Example 1]

Into a stainless steel reaction tube having an internal volume of 10 cm³, a pulverized product (0.5 g) of a "laminated film obtained by laminating a polyethylene terephthalate resin layer having a thickness of 12 µm and a polyethylene (LDPE) resin layer having a thickness of 50 µm with a urethane-based adhesive" which is a waste plastic as a sample and water (5 cm³) were introduced, and the reaction tube was sealed. This reaction tube was put into a molten salt bath, and a hydrothermal reaction treatment was performed at a reaction temperature during a reaction time described in Table 2. In this hydrothermal reaction treatment, the pulverized product was melted, a hydrolytic component a of the hydrolysis polymer was not precipitated, and the nonhydrolyzable polymer was separated from an aqueous phase in a molten state. After the hydrothermal reaction treatment, the reaction tube was cooled with water, and a reaction product was filtered. In this way, the solid nonhydrolyzable polymer, a solid hydrolytic component a1, and a hydrolytic component a2 dissolved in the aqueous phase were recovered. The solid nonhydrolyzable polymer and the solid hydrolytic component a1 were not compatible with each other and could be easily selected.

The nonhydrolyzable polymer and the hydrolytic component a were identified by the following method under the following conditions. As a result, the nonhydrolyzable polymer was polyethylene, the hydrolytic component a was terephthalic acid and ethylene glycol, in which the hydrolytic component a1 was terephthalic acid, and the hydrolytic component a2 was ethylene glycol.

### <Identification of hydrolytic component a1>

The hydrolytic component a1 was dissolved in methanol, and HPLC measurement was performed under the following conditions. As a result, a retention time thereof coincided with a retention time of terephthalic acid estimated as the component a1, and thus the component a1 was identified as terephthalic acid.
HPLC apparatus: Prominence-i LC-2030C (manufactured by Shimadzu Corporation)
Column: ODS-100V (5 µm, 4.6 mm I.D. × 150 mm) (manufactured by Tosoh Corporation) Column thermostat: 30°C
Mobile phase composition:
   (Mobile phase A) 0.1% trifluoroacetic acid/acetonitrile = 90/10
   (Mobile phase B) 0.1% trifluoroacetic acid/acetonitrile = 60/40
Gradient conditions: described in Table 1 below.
Flow rate: 0.8 mL/min
Detector: UV detector
Wavelength: 242 nm

**Table 1**

| Time (min) | Mobile phase A (vol%) | Mobile phase B (vol%) |
|---|---|---|
| 0 | 90 | 10 |
| 3 | 83 | 17 |
| 6 | 75 | 25 |
| 12 | 60 | 40 |
| 13 | 90 | 10 |

### <Identification of hydrolytic component a2>

The aqueous phase obtained by filtration was directly analyzed by HPLC, and the hydrolytic component a2 was identified and quantified.
HPLC apparatus: Prominence sugar analysis system (manufactured by Shimadzu Corporation)
Column: RezexTM RPM-Monosaccharide Pb + 2 (8%) 300 x 7.8 mm manufactured by Phenomenex
Column temperature: 70°C
Mobile phase: water
Flow rate: 0.7 mL/min
Detector: differential refractive index detector

### <Recovery ratio>

In calculating a recovery ratio of the hydrolytic component, first, the amount of polyethylene terephthalate contained in the polyethylene terephthalate resin layer was calculated by the following method. The polyethylene terephthalate resin layer used has a purity of 99.9% or more. As an impurity, a silica filler for an antiblocking effect was contained, but the silica filler was ignored, and polyethylene terephthalate introduced was regarded as having a purity of 100% in this study.

Next, a recovery ratio (mol%) of the hydrolytic component when the calculated amount of polyethylene terephthalate was regarded as 100 mol% was calculated.

### <Identification of recovered nonhydrolyzable polymer>

The nonhydrolyzable polymer was identified by DSC and NMR.

### <Calculation of recovery ratio of recovered nonhydrolyzable polymer>

In calculating a recovery ratio of the nonhydrolyzable polymer, first, polyethylene contained in the polyethylene resin layer was calculated by the following method.

### (Calculation of recovery ratio)

The content of the nonhydrolyzable polymer contained in the recovered solid was measured by TG-DTA. At this time, each of pure polyethylene and pure hydrolyzable polymer was subjected to TG-DTA analysis, a calibration curve in which a peak area thereof was correlated with each weight was prepared, and the content was determined based on the calibration curve.

### <Measurement of average molecular weight maintaining ratio of recovered nonhydrolyzable polymer>

The recovered solid nonhydrolyzable polymer was subjected to GPC measurement by the following method under the following conditions to measure a weight average molecular weight Mw^{A} thereof. Similarly, a weight average molecular weight Mw^{F} of the nonhydrolyzable polymer extracted from the sample was measured. A ratio of the weight average molecular weight Mw^{A} of the recovered nonhydrolyzable polymer to the weight average molecular weight Mw^{F} of the nonhydrolyzable polymer before the hydrothermal reaction treatment ([Mw^{A}/Mw^{F}] × 100 (%)) was calculated and described in Table 2.

### (Measurement of weight average molecular weight (GPC))

High-temperature GPC apparatus: HLC-8321GPC/HT (manufactured by Tosoh Corporation, detector: RI)
Column: TSKgel guardcolumnHHR (30) HT (7.5 mm I.D. × 7.5 cm) × 1+ TSKgel GMHHR-H (20) HT (7.8 mm I.D. × 30 cm) × 3 (both manufactured by Tosoh Corporation)
Eluent: 1,2,4-trichlorobenzene + dibutylhydroxytoluene (BHT, 0.05 mass%)
Flow rate: 1.0 mL/min
Column temperature: 140°C
Sample concentration: 1 mg/mL
Calibration curve: fifth-order approximate curve using standard polystyrene manufactured by Tosoh Corporation. The molecular weight is a PE conversion value using a Q factor

**Table 2**

| No. | Hydrothermal reaction treatment conditions | | Recovery ratio of terephthalic acid [mol%] | Recovery ratio of ethylene glycol [mol%] | Recovery ratio of polyethylene [mass%] | Average molecular weight maintaining ratio of polyethylene [%] | Remarks |
|---|---|---|---|---|---|---|---|
| | Reaction temperature [°C] | Reaction time [min] | | | | | |
| Ex. 1-1 | 250 | 15 | 16.3 | 19.8 | 91 | 107 | Undecomposed PET was found. |
| Ex. 1-2 | | 60 | 84 | 88 | 90 | 108 | - |
| Ex. 1-3 | 300 | 15 | 87 | 87 | 93 | 99 | - |
| Ex. 1-4 | | 30 | 79 | 83 | 100 | 101 | - |
| Ex. 1-5 | | 60 | 90 | 72 | 90 | 101 | - |
| Ex. 1-6 | 325 | 15 | 89 | 84 | 95 | 92 | - |
| Ex. 1-7 | | 30 | 87 | 73 | 100 | 91 | - |
| Ex. 1-8 | | 60 | 88 | 44 | 94 | 84 | - |
| CEx. 1-1 | 350 | 10 | 91 | 75 | 99 | 69 | - |
| CEx. 1-2 | | 15 | 87 | 78 | 99 | 55 | - |
| CEx. 1-3 | | 60 | 86 | 25 | 61 | 36 | - |

| | | | | | | | |
|---|---|---|---|---|---|---|---|
| Remarks: 'Ex.' means Example according to this invention, and 'CEx.' means Comparative Example. | | | | | | | |

"Undecomposed PET" means PET that was not hydrolyzed under the hydrothermal reaction treatment conditions.

### [Example 2]

A hydrothermal reaction treatment was performed in a similar manner to Example 1 except that a pulverized product (0.5 g) of a "laminated film obtained by laminating a polyamide (nylon 6) resin layer having a thickness of 15 µm and a polyethylene (LLDPE) resin layer having a thickness of 50 µm with a urethane-based adhesive" which is a waste plastic was used as a sample and the hydrothermal reaction treatment conditions were set to the conditions described in Table 4 below, and a solid nonhydrolyzable polymer and a hydrolytic component a3 dissolved in an aqueous phase were recovered. In the hydrothermal reaction treatment, the pulverized product was melted, and the nonhydrolyzable polymer was separated from the aqueous phase in a molten state. When the recovered nonhydrolyzable polymer and hydrolytic component a3 were identified, the nonhydrolyzable polymer was polyethylene, and the hydrolytic component a3 was ε-caprolactam.

For the nonhydrolyzable polymer, a recovery ratio and an average molecular weight maintaining ratio were calculated in a similar manner to Example 1. The recovered hydrolytic component a3 was dissolved in methanol, subjected to HPLC measurement by the following method under the following conditions, identified by coincidence of a retention time, and a recovery ratio was calculated by the following method under the following conditions. Obtained results are described in Table 4.

### <Identification of hydrolytic component a3>

HPLC apparatus: 1200 (manufactured by Agirent Technologies)
Column: Scherzo SW-C18 (3.0 mm I.D. × 150 mm) (manufactured by Imtact)
Column thermostat: 35°C
Mobile phase composition:
   (Mobile phase A) 0.01% formic acid aqueous solution
   (Mobile phase B) 200 mM ammonium formate aqueous solution/acetonitrile = 50/50
Gradient conditions: described in Table 3 below.
Flow rate: 0.4 mL/min
Detector: UV detector
Wavelength: 210 nm

**Table 3**

| Time (min) | Mobile phase A (vol%) | Mobile phase B (vol%) |
|---|---|---|
| 0 | 95 | 5 |
| 5 | 80 | 20 |
| 20 | 0 | 100 |

### <Calculation of recovery ratio of hydrolytic component a3>

In calculation of a recovery ratio of the hydrolytic component, first, polyamide (nylon 6) was calculated by the following method under the following conditions.

### (Method and conditions)

The polyamide (nylon 6) resin layer used has a purity of 99.9% or more. As an impurity, a silica filler for an antiblocking effect was contained, but the silica filler was ignored, and nylon (polyamide 6) introduced was regarded as having a purity of 100% in this study.

Next, a recovery ratio of the hydrolytic component a3 when the calculated amount of nylon (polyamide 6) was regarded as 100 mol% was calculated by the following method.

### (Method)

The recovery ratio was calculated by calculation from the total mass of the hydrolytic component a3 contained in the aqueous phase recovered by the hydrothermal treatment.

**Table 4**

| No. | Hydrothermal reaction treatment conditions | | Recovery ratio of ε-caprolactam [mol%] | Recovery ratio of polyethylene [mass%] | Average molecular weight maintaining ratio of polyethylene [%] | Remarks |
|---|---|---|---|---|---|---|
| | Reaction temperature [°C] | Reaction time [min] | | | | |
| Ex. 2-1 | 250 | 15 | 1 | 102 | 111 | Undecomposed Ny was found. |
| Ex. 2-2 | | 60 | 6 | 103 | 108 | Undecomposed Ny was found. |
| Ex. 2-3 | 300 | 15 | 28 | 96 | 100 | Undecomposed Ny was found. |
| Ex. 2-4 | | 30 | 63 | 99 | 102 | |
| Ex. 2-5 | | 60 | 80 | 98 | 100 | - |
| Ex. 2-6 | 325 | 15 | 77 | 101 | 93 | - |
| Ex. 2-7 | | 30 | 84 | 100 | 87 | - |
| Ex. 2-8 | | 60 | 83 | 102 | 81 | - |
| CEx. 2-1 | 350 | 10 | 80 | 97 | 77 | - |
| CEx. 2-2 | | 15 | 81 | 98 | 59 | - |
| CEx. 2-3 | | 60 | 71 | 99 | 40 | - |

| | | | | | | |
|---|---|---|---|---|---|---|
| Remarks: 'Ex.' means Example according to this invention, and 'CEx.' means Comparative Example. | | | | | | |

"Undecomposed Ny" means nylon 6 that was not hydrolyzed under the hydrothermal reaction treatment conditions.

### [Example 3]

Into a reaction tube having an internal volume of 10 cm³, pellets (0.5 g) of "polyamide (nylon 6) or polyethylene (LDPE)" as a sample and water (5 cm³) were introduced, and the reaction tube was sealed. This reaction tube was put into a molten salt bath, and a hydrothermal reaction treatment was performed at a reaction temperature during a reaction time described in Table 5. In the hydrothermal reaction treatment, the pulverized product was melted, and the nonhydrolyzable polymer was separated from the aqueous phase in a molten state. After the hydrothermal reaction treatment, the reaction tube was cooled with water, and a reaction product was filtered. In this way, the solid nonhydrolyzable polymer and a hydrolytic component a3 dissolved in the aqueous phase were recovered.

The nonhydrolyzable polymer and the hydrolytic component a3 were identified by the following method under the following conditions. As a result, the nonhydrolyzable polymer was polyethylene, and the hydrolytic component a3 was ε-caprolactam.

For the nonhydrolyzable polymer, a recovery ratio and an average molecular weight maintaining ratio were calculated in a similar manner to Example 1. A recovery ratio of the recovered hydrolytic component a3 was calculated in a similar manner to Example 2. Obtained results are described in Table 5.

### <Identification of hydrolytic component a3>

The hydrolytic component a was dissolved in water, subjected to HPLC measurement under the following conditions, and identified by coincidence of a retention time.
LC apparatus: Model 1200 manufactured by Agilent Technologies
MS apparatus: Model 6140 manufactured by Agilent Technologies
Column: Scherzo SW-C18 manufactured by Imtakt
Column temperature: 35°C
Mobile phase A: 0.01% formic acid aqueous solution
Mobile phase B: 200 mM ammonium formate aqueous solution/acetonitrile = 1/1 (v/v)
Detector: PDA and MS
Ionization method and Polarity: electrospray ionization method (ESI) and Positive

**Table 5**

| No. | Hydrothermal reaction treatment conditions | | Recovery ratio of ε-caprolactam [mol%] | Recovery ratio of polyethylene [mass%] | Average molecular weight maintaining ratio of polyethylene [%] |
|---|---|---|---|---|---|
| | Reaction temperature [°C] | Reaction time [min] | | | |
| Ex. 3-1 | 300 | 60 | 85 | 90 | 101 |
| Ex. 3-2 | 325 | 15 | 75 | 95 | 92 |
| Ex. 3-3 | | 30 | 84 | 100 | 91 |
| Ex. 3-4 | | 60 | 87 | 94 | 84 |

| | | | | | |
|---|---|---|---|---|---|
| Remarks: 'Ex.' means Example according to this invention. | | | | | |

### [Example 4]

A solid nonhydrolyzable polymer and a hydrolytic component a3 dissolved in an aqueous phase were recovered under the hydrothermal reaction treatment conditions described in Table 6 below in a similar manner to Example 3 except that a pulverized product (0.3 g) of "a multilayer film (polyamide content: 29.4 mass%) obtained by laminating a polyamide (nylon 6/66) resin layer, a polyethylene (LDPE) resin layer, and an adhesive layer" which is a waste plastic was used as a sample in a reaction tube having an internal volume of 8 cm³. In the hydrothermal reaction treatment, the pulverized product was melted, and the nonhydrolyzable polymer was separated from the aqueous phase in a molten state. When the recovered nonhydrolyzable polymer and hydrolytic component a3 were identified, the nonhydrolyzable polymer was polyethylene, and the hydrolytic component a3 was ε-caprolactam.

A recovery ratio and an average molecular weight maintaining ratio of the nonhydrolyzable polymer were calculated, the hydrolytic component a3 was identified, and a recovery ratio thereof was calculated. Obtained results are described in Table 6.

### <Identification of hydrolytic component a3>

The hydrolytic component a3 was dissolved in water, subjected to HPLC measurement under the following conditions, and identified by coincidence of a retention time.
LCMS apparatus: LCMS2020 model manufactured by Shimadzu Corporation
Column: ODP-40 4E manufactured by SHODEX
Column temperature: 40°C
Mobile phase A: 0.1% formic acid aqueous solution
Mobile phase B: acetonitrile
Detector: PDA and MS
Ionization method and Polarity: electrospray ionization method (ESI) and Positive

### <Measurement of weight average molecular weight (GPC)>

High-temperature GPC apparatus: HLC-8321GPC/HT (manufactured by Tosoh Corporation, detector: RI)
Column: TSKgel guardcolumnHHR (S)) + TSKgel GMHHR-H (S) HT × 2
Eluent: o-dichlorobenzene
Flow rate: 1.0 mL/min
Column temperature: 145°C
Sample concentration: 0.1 wt/vol%
Calibration curve: approximate curve using standard polystyrene.

**Table 6**

| No. | Hydrothermal reaction treatment conditions | | Recovery ratio of ε-caprolactam [mol%] | Recovery ratio of polyethylene [%] | Average molecular weight maintaining ratio of polyethylene [%] |
|---|---|---|---|---|---|
| | Reaction temperature [°C] | Reaction time [min] | | | |
| Ex. 4 | 330 | 30 | 81 | 101 | 81 |

| | | | | | |
|---|---|---|---|---|---|
| Remarks: 'Ex.' means Example according to this invention. | | | | | |

### [Example 5]

A solid nonhydrolyzable polymer and a hydrolytic component a dissolved in an aqueous phase were recovered under the hydrothermal reaction treatment conditions described in Table 7 below in a similar manner to Example 3 except that pellets (0.5 g) of "polyamide (nylon 6/66) or polyethylene (LDPE)" were used as a sample. In the hydrothermal reaction treatment, the pulverized product was melted, and the nonhydrolyzable polymer was separated from the aqueous phase in a molten state. When the recovered nonhydrolyzable polymer and hydrolytic component a were identified, the nonhydrolyzable polymer was polyethylene, and the hydrolytic component a was ε-caprolactam.

A recovery ratio and an average molecular weight maintaining ratio of the nonhydrolyzable polymer were calculated, and a recovery ratio of the hydrolytic component a was calculated, which are described in Table 7.

**Table 7**

| No. | Hydrothermal reaction treatment conditions | | Recovery ratio of ε-caprolactam [mol%] | Recovery ratio of polyethylene [%] | Average molecular weight maintaining ratio of polyethylene [%] |
|---|---|---|---|---|---|
| | Reaction temperature [°C] | Reaction time [min] | | | |
| Ex. 5-1 | 300 | 60 | 78 | 90 | 101 |
| Ex. 5-2 | 325 | 15 | 72 | 95 | 92 |
| Ex. 5-3 | | 30 | 80 | 100 | 91 |
| Ex. 5-4 | | 60 | 84 | 94 | 84 |

| | | | | | |
|---|---|---|---|---|---|
| Remarks: 'Ex.' means Example according to this invention. | | | | | |

### [Example 6]

A solid nonhydrolyzable polymer and a hydrolytic component a dissolved in an aqueous phase were recovered in a similar manner to Example 3 except that the hydrothermal reaction treatment conditions were changed to the hydrothermal reaction treatment conditions described in Table 8 below. As described in Table 8 below, the recovered nonhydrolyzable polymer had a weight average molecular weight maintaining ratio of less than 80% under a hydrothermal reaction treatment condition of 350°C, and it was found that the recovered nonhydrolyzable polymer could not maintain the weight average molecular weight before the hydrothermal treatment.

**Table 8**

| No. | Hydrothermal reaction treatment conditions | | Recovery ratio of ε-caprolactam [mol%] | Recovery ratio of polyethylene [mass%] | Average molecular weight maintaining ratio of polyethylene [%] |
|---|---|---|---|---|---|
| | Reaction temperature [°C] | Reaction time [min] | | | |
| Ex. 6-1 | 250 | 15 | 1 | 91 | 107 |
| Ex. 6-2 | | 60 | 6 | 90 | 108 |
| Ex. 6-3 | 300 | 15 | 30 | 93 | 99 |
| Ex. 6-4 | | 30 | 64 | 100 | 101 |
| CEx. 6-1 | 350 | 10 | 74 | 99 | 69 |
| CEx. 6-2 | | 15 | 91 | 99 | 55 |
| CEx. 6-3 | | 60 | 77 | 61 | 36 |

| | | | | | |
|---|---|---|---|---|---|
| Remarks: 'Ex.' means Example according to this invention, and 'CEx.' means Comparative Example. | | | | | |

### [Example 7]

A solid nonhydrolyzable polymer and a hydrolytic component a dissolved in an aqueous phase were recovered in a similar manner to Example 5 except that the hydrothermal reaction treatment conditions were changed to the hydrothermal reaction treatment conditions described in Table 9 below. As described in Table 9 below, the recovered nonhydrolyzable polymer had a weight average molecular weight maintaining ratio of less than 80% under a hydrothermal reaction treatment condition of 350°C, and it was found that the recovered nonhydrolyzable polymer could not maintain the weight average molecular weight before the hydrothermal treatment.

**Table 9**

| No. | Hydrothermal reaction treatment conditions | | Recovery ratio of ε-caprolactam [mol%] | Recovery ratio of polyethylene [%] | Average molecular weight maintaining ratio of polyethylene [%] |
|---|---|---|---|---|---|
| | Reaction temperature [°C] | Reaction time [min] | | | |
| Ex. 7-1 | 250 | 15 | 0 | 91 | 107 |
| Ex. 7-2 | | 60 | 5 | 90 | 108 |
| Ex. 7-3 | 300 | 15 | 31 | 93 | 99 |
| Ex. 7-4 | | 30 | 60 | 100 | 101 |
| CEx. 7-1 | 350 | 10 | 80 | 99 | 69 |
| CEx. 7-2 | | 15 | 85 | 99 | 55 |
| CEx. 7-3 | | 60 | 74 | 61 | 36 |

| | | | | | |
|---|---|---|---|---|---|
| Remarks: 'Ex.' means Example according to this invention, and 'CEx.' means Comparative Example. | | | | | |

### [Example 8]

In Example 8, hydrolysis conditions were further examined using the "polyethylene terephthalate resin layer" peeled from the pulverized product used in Example 1.

That is, the "polyethylene terephthalate resin layer" was subjected to a hydrothermal reaction treatment (hydrolysis) in a similar manner to Example 1 except that the "polyethylene terephthalate resin layer" was used and the hydrothermal reaction treatment conditions were changed to the conditions described in Table 10 below in Example 1, and recovery ratios of terephthalic acid and ethylene glycol were calculated. The results are described in Table 10.

As described in Table 10, it is found that as the reaction time is higher, each of terephthalic acid and ethylene glycol can be recovered at a relatively higher recovery ratio even when the reaction time is shorter.

**Table 10**

| No. | Hydrothermal reaction treatment conditions | | Recovery ratio of terephthalic acid [mol%] | Recovery ratio of ethylene glycol [mol%] |
|---|---|---|---|---|
| | Reaction temperature [°C] | Reaction time [min] | | |
| Ex. 8-1 | 300 | 2 | 22 | 15 |
| Ex. 8-2 | | 5 | 58 | 67 |
| Ex. 8-3 | | 10 | 72 | 88 |
| Ex. 8-4 | 325 | 2 | 40 | 41 |
| Ex. 8-5 | | 5 | 72 | 80 |
| Ex. 8-6 | | 10 | 77 | 84 |
| Ex. 8-7 | 350 | 2 | 57 | 61 |
| Ex. 8-8 | | 5 | 77 | 78 |

| | | | | |
|---|---|---|---|---|
| Remarks: 'Ex.' means Example according to this invention. | | | | |

### [Example 9]

In Example 9, hydrolysis conditions were further examined using the "polyamide (nylon 6) resin layer" peeled from the pulverized product used in Example 2.

That is, the "polyamide (nylon 6) resin layer" was subjected to a hydrothermal reaction treatment (hydrolysis) in a similar manner to Example 2 except that the "polyamide (nylon 6) resin layer" was used and the hydrothermal reaction treatment conditions were changed to the conditions described in Table 11 below in Example 2, and a recovery ratio of ε-caprolactam was calculated. The results are described in Table 11.

As described in Table 11, it is found that as the reaction time is higher, ε-caprolactam can be recovered at a relatively higher recovery ratio even when the reaction time is shorter.

**Table 11**

| No. | Hydrothermal reaction treatment conditions | | Recovery ratio of ε-caprolactam [mol%] |
|---|---|---|---|
| | Reaction temperature [°C] | Reaction time [min] | |
| Example 9-1 | 300 | 10 | 23 |
| Example 9-2 | 325 | 5 | 26 |
| Example 9-3 | | 10 | 65 |
| Example 9-4 | 350 | 5 | 68 |

### [Example 10]

In Example 10, the average molecular weight maintaining ratio was further examined using the "polyethylene (LLDPE) resin layer" peeled from the pulverized product used in Example 2.

That is, the "polyethylene (LLDPE) resin layer" was subjected to a hydrothermal reaction treatment (hydrolysis) in a similar manner to Example 2 except that the "polyethylene (LLDPE) resin layer" was used and the hydrothermal reaction treatment conditions were changed to the conditions described in Table 12 below in Example 2, and the average molecular weight maintaining ratio of polyethylene was calculated. The results are described in Table 12.

As described in Table 12, it is found that the average molecular weight maintaining ratio of polyethylene tends to be higher as the reaction time of the hydrothermal reaction treatment is shorter.

**Table 12**

| No. | Hydrothermal reaction treatment conditions | | Average molecular weight maintaining ratio of polyethylene [%] |
|---|---|---|---|
| | Reaction temperature [°C] | Reaction time [min] | |
| Example 10-1 | 300 | 2 | 97 |
| Example 10-2 | | 5 | 95 |
| Example 10-3 | | 10 | 98 |
| Example 10-4 | 325 | 2 | 100 |
| Example 10-5 | | 5 | 94 |
| Example 10-6 | | 10 | 91 |
| Example 10-7 | 350 | 2 | 96 |
| Example 10-8 | | 5 | 80 |

### [Example 11]

In Example 11, the "polyethylene terephthalate resin layer" peeled from the pulverized product used in Example 1 was subjected to a hydrothermal reaction treatment in the presence of an acid or a base, and a recovery ratio of ethylene glycol was examined.

That is, the "polyethylene terephthalate resin layer" was subjected to a hydrothermal reaction treatment (hydrolysis) in a similar manner to Example 1 except that the "polyethylene terephthalate resin layer" was subjected to the hydrothermal reaction treatment under the hydrothermal reaction treatment conditions described in Table 13 below in pure water, a 0.1 mass% HNO₃ aqueous solution, or a 0.1 mass% NH₃ aqueous solution in Example 1, and a recovery ratio of ethylene glycol was calculated. The results are described in Table 13.

As described in Table 13, it is found that when the hydrothermal reaction treatment is performed in the presence of an acid or a base, preferably in the presence of a base, the recovery ratio of ethylene glycol is improved.

**Table 13**

| No. | Hydrothermal reaction treatment conditions | | Recovery ratio of ethvlene glycol mol%] | | |
|---|---|---|---|---|---|
| | Reaction temperature [°C] | Reaction time [min] | Pure water | In HNO₃ aqueous solution | In NH₃ aqueous solution |
| Ex. 11-1 | 250 | 15 | 20 | 22 | 26 |
| Ex. 11-2 | | 30 | - | 77 | 63 |
| Ex. 11-3 | | 60 | 88 | 89 | 94 |
| Ex. 11-4 | 275 | 15 | - | 80 | 75 |
| Ex. 11-5 | | 30 | - | 92 | 98 |
| Ex. 11-6 | | 60 | - | 95 | 99 |
| Ex. 11-7 | 300 | 15 | 87 | 92 | 96 |

| | | | | | |
|---|---|---|---|---|---|
| Remarks: 'Ex.' means Example according to this invention. | | | | | |

### [Example 12]

In Example 12, the "polyethylene (LDPE) resin layer" and the "polyethylene (LLDPE) resin layer" peeled from the pulverized products used in Examples 1 and 2 were subjected to a hydrothermal reaction treatment under an atmospheric environment or a nitrogen gas environment, and a number average molecular weight maintaining ratio was examined.

That is, water was allowed to stand overnight in a glove box in a nitrogen gas atmosphere, and then each of the resin layers (0.5 g) and (5 cm³) was introduced into a reaction tube (inner volume: 10 cm³) in the glove box, and the reaction tube was purged with nitrogen gas. Note that purging with nitrogen gas was omitted in a case where the hydrothermal reaction treatment was performed under an atmospheric environment. This reaction tube was put into a molten salt bath, and a hydrothermal reaction treatment was performed at a reaction temperature during a reaction time described in Table 14. After the hydrothermal reaction treatment, the reaction tube was cooled with water, and a treated product was filtered (solid-liquid separation) to obtain a solid.

A number average molecular weight of the solid was measured in a similar manner to <Measurement of average molecular weight maintaining ratio of recovered nonhydrolyzable polymer> in Example 1, and an average molecular weight maintaining ratio was calculated. The results are described in Table 14.

As described in Table 14, it is found that when the hydrothermal reaction treatment is performed under an oxygen gas-absent environment such as under a nitrogen gas environment, the molecular weight maintaining ratio of the recovered polyethylene can be further increased.

**Table 14**

| No. | Hydrothermal reaction treatment conditions | | Average molecular weight maintaining ratio [%] | | | |
|---|---|---|---|---|---|---|
| | Reaction temperature [°C] | Reaction time [min] | LDPE | | LLDPE | |
| | | | Under atmospheric environment | Under nitrogen gas | Under atmospheric environment | Under nitrogen gas |
| Ex. 12-1 | 250 | 15 | 90 | - | 89 | - |
| Ex. 12-2 | | 60 | 90 | - | 94 | - |
| Ex. 12-3 | 300 | 15 | 86 | - | 88 | - |
| Ex. 12-4 | | 60 | 86 | - | 93 | - |
| Ex. 12-5 | 325 | 15 | 77 | 91 | 86 | 90 |
| Ex. 12-6 | | 60 | 76 | 88 | 79 | 83 |
| Ex. 12-7 | 350 | 15 | 54 | 79 | 60 | 68 |
| Ex. 12-8 | | 60 | 48 | 59 | 40 | 48 |

| | | | | | | |
|---|---|---|---|---|---|---|
| Remarks: 'Ex.' means Example according to this invention. | | | | | | |

### [Example 13]

In Example 13, a "polypropylene resin layer" was subjected to a hydrothermal reaction treatment under a nitrogen gas environment, and a number average molecular weight maintaining ratio was examined.

That is, water was allowed to stand overnight in a glove box in a nitrogen gas atmosphere, then 0.5 g of hydrothermally-treated CPP (non-oriented polypropylene) or OPP (biaxially oriented polypropylene) and 5 cm³ of water were introduced into a reaction tube (inner volume: 10 cm³) in the glove box, and the reaction tube was purged with nitrogen gas. This reaction tube was put into a molten salt bath, and a hydrothermal reaction treatment was performed at a reaction temperature during a reaction time described in Table 15. After the hydrothermal reaction treatment, the reaction tube was cooled with water, and a treated product was filtered (solid-liquid separation) to obtain a solid.

A number average molecular weight of the solid was measured in a similar manner to <Measurement of average molecular weight maintaining ratio of recovered nonhydrolyzable polymer> in Example 1, and an average molecular weight maintaining ratio was calculated. The results are described in Table 15.

As described in Table 15, it is found that when the hydrothermal reaction treatment is performed under an oxygen gas-absent environment such as under a nitrogen gas environment, even polypropylene which is more easily decomposed than polyethylene can be recovered with a sufficient molecular weight maintaining ratio.

**Table 15**

| No. | Hydrothermal reaction treatment conditions | | Average molecular weight maintaining ratio [%] | |
|---|---|---|---|---|
| | Reaction temperature [°C] | Reaction time [min] | CPP | OPP |
| Example 13-1 | 250 | 15 | 92 | 95 |
| Example 13-2 | | 60 | 80 | 100 |
| Example 13-3 | 300 | 15 | 85 | 110 |
| Example 13-4 | | 60 | 88 | 93 |
| Example 13-5 | 325 | 15 | 81 | 85 |
| Example 13-6 | | 60 | 76 | 72 |
| Example 13-7 | 350 | 15 | 62 | 52 |
| Example 13-8 | | 60 | 33 | 33 |

### [Example 14]

A solid nonhydrolyzable polymer and a hydrolytic component a3 dissolved in an aqueous phase were recovered under the hydrothermal reaction treatment conditions described in Table 16 below in a similar manner to Example 3 except that a pulverized product (0.5 g) of a "multilayer film (polyamide content: 25.2 mass%) obtained by laminating a polyamide (nylon 6) resin layer, a polyethylene (LDPE) resin layer, and an adhesive layer" which is a waste plastic was used as a sample. In the hydrothermal reaction treatment, the pulverized product was melted, and the nonhydrolyzable polymer was separated from the aqueous phase in a molten state. When the recovered nonhydrolyzable polymer and hydrolytic component a3 were identified, the nonhydrolyzable polymer was polyethylene, and the hydrolytic component a3 was ε-caprolactam.

The hydrolytic component a3 was identified, and a recovery ratio thereof was calculated. Obtained results are described in Table 16.

### <Identification of hydrolytic component a3>

The hydrolytic component a3 was dissolved in water, subjected to HPLC measurement under the following conditions, and identified by coincidence of a retention time.
LC apparatus: Model 1200 manufactured by Agilent Technologies
MS apparatus: Model 6140 manufactured by Agilent Technologies
Column: Scherzo SW-C18 manufactured by Imtakt
Column temperature: 35°C
Mobile phase A: 0.01% formic acid aqueous solution
Mobile phase B: 200 mM ammonium formate aqueous solution/acetonitrile = 1/1 (v/v)
Detector: PDA and MS
Ionization method and Polarity: electrospray ionization method (ESI) and Positive

**Table 16**

| No. | Hydrothermal reaction treatment conditions | | Recovery ratio of ε-caprolactam [mol%] |
|---|---|---|---|
| | Reaction temperature [°C] | Reaction time [min] | |
| Example 14-1 | 350 | 10 | 73 |
| Example 14-2 | | 15 | 80 |
| Example 14-3 | 380 | 5 | 76 |
| Example 14-4 | | 10 | 80 |

### [Example 15]

A solid nonhydrolyzable polymer and a hydrolytic component a3 dissolved in an aqueous phase were recovered under the hydrothermal reaction treatment conditions described in Table 17 below in a similar manner to Example 4 except that a pulverized product (0.5 g) of a "multilayer film (polyamide content: 24.7 mass%) obtained by laminating a polyamide (nylon 6/66) resin layer, a polyethylene (LDPE) resin layer, and an adhesive layer" which is a waste plastic was used as a sample in a reaction tube having an internal volume of 10 cm³. In the hydrothermal reaction treatment, the pulverized product was melted, and the nonhydrolyzable polymer was separated from the aqueous phase in a molten state. When the recovered nonhydrolyzable polymer and hydrolytic component a3 were identified, the nonhydrolyzable polymer was polyethylene, and the hydrolytic component a3 was ε-caprolactam.

The hydrolytic component a3 was identified, and a recovery ratio thereof was calculated. Obtained results are described in Table 17.

### <Identification of hydrolytic component a3>

The hydrolytic component a3 was dissolved in water, subjected to HPLC measurement under the following conditions, and identified by coincidence of a retention time.
LC apparatus: Model 1200 manufactured by Agilent Technologies
MS apparatus: Model 6140 manufactured by Agilent Technologies
Column: Scherzo SW-C18 manufactured by Imtakt
Column temperature: 35°C
Mobile phase A: 0.01% formic acid aqueous solution
Mobile phase B: 200 mM ammonium formate aqueous solution/acetonitrile = 1/1 (v/v)
Detector: PDA and MS
Ionization method and Polarity: electrospray ionization method (ESI) and Positive

**Table 17**

| No. | Hydrothermal reaction treatment conditions | | Recovery ratio of ε-caprolactam [mol%] |
|---|---|---|---|
| | Reaction temperature [°C] | Reaction time [min] | |
| Example 15-1 | 350 | 10 | 77 |
| Example 15-2 | | 15 | 85 |
| Example 15-3 | 380 | 5 | 77 |
| Example 15-4 | | 10 | 81 |

### [Example 16]

In Example 16, the amount of water under the hydrothermal reaction treatment condition was examined using a pulverized product of a "multilayer film (polyamide content: 25.2 mass%) obtained by laminating a polyamide (nylon 6) resin layer, a polyethylene (LDPE) resin layer, and an adhesive layer".

That is, a solid nonhydrolyzable polymer and a hydrolytic component a3 dissolved in an aqueous phase were recovered in a similar manner to Example 3 except that the hydrothermal reaction treatment conditions were changed to the conditions described in Table 18 below using the "multilayer film obtained by laminating a polyamide (nylon 6) resin layer, a polyethylene (LDPE) resin layer, and an adhesive layer" in Example 3. In the hydrothermal reaction treatment, the pulverized product was melted, and the nonhydrolyzable polymer was separated from the aqueous phase in a molten state. When the recovered nonhydrolyzable polymer and hydrolytic component a3 were identified, the nonhydrolyzable polymer was polyethylene, and the hydrolytic component a3 was ε-caprolactam.

The hydrolytic component a3 was identified, and a recovery ratio thereof was calculated. Obtained results are described in Table 18.

The "mass ratio of water added" in Table 18 indicates a mass ratio of water used per unit mass of the multilayer film used in the hydrothermal reaction treatment step. Note that the amount of water used relative to 100 parts by mass of the multilayer film is a value obtained by multiplying a numerical value of the "mass ratio of water added" by 100.

### <Identification of hydrolytic component a3>

The hydrolytic component a3 was dissolved in water, subjected to HPLC measurement under the following conditions, and identified by coincidence of a retention time.
LC apparatus: Model 1200 manufactured by Agilent Technologies
MS apparatus: Model 6140 manufactured by Agilent Technologies
Column: Scherzo SW-C18 manufactured by Imtakt
Column temperature: 35°C
Mobile phase A: 0.01% formic acid aqueous solution
Mobile phase B: 200 mM ammonium formate aqueous solution/acetonitrile = 1/1 (v/v)
Detector: PDA and MS
Ionization method and Polarity: electrospray ionization method (ESI) and Positive

**Table 18**

| No. | Hydrothermal reaction treatment conditions | | | Recovery ratio of ε-caprolactam [mol%] |
|---|---|---|---|---|
| | Reaction temperature [°C] | Reaction time [min] | Mass ratio of water added [Water/Multilayer Film] | |
| Ex. 16-1 | 300 | 60 | 3.3/1 | 75 |
| Ex. 16-2 | | | 5/1 | 78 |
| Ex. 16-3 | | | 10/1 | 85 |
| Ex. 16-4 | 325 | 30 | 2/1 | 76 |
| Ex. 16-5 | | | 3.3/1 | 81 |
| Ex. 16-6 | | | 5/1 | 80 |
| Ex. 16-7 | | | 10/1 | 83 |
| Ex. 16-8 | 350 | 10 | 3.3/1 | 80 |
| Ex. 16-9 | 350 | 15 | 2.5/1 | 70 |
| Ex. 16-10 | | | 3.3/1 | 78 |
| Ex. 16-11 | | | 5/1 | 78 |
| Ex. 16-12 | | | 10/1 | 80 |
| Ex. 16-11 | 380 | 10 | 5/1 | 71 |
| Ex. 16-12 | | | 10/1 | 80 |

| | | | | |
|---|---|---|---|---|
| Remarks: 'Ex.' means Example according to this invention. | | | | |

### [Example 17]

In Example 17, the amount of water under the hydrothermal reaction treatment condition was examined using a pulverized product of a "multilayer film (polyamide content: 24.7 mass%) obtained by laminating a polyamide (nylon 6/66) resin layer, a polyethylene (LDPE) resin layer, and an adhesive layer".

That is, a solid nonhydrolyzable polymer and a hydrolytic component a3 dissolved in an aqueous phase were recovered in a similar manner to Example 4 except that the hydrothermal reaction treatment conditions were changed to the conditions described in Table 19 below using the "multilayer film obtained by laminating a polyamide (nylon 6/66) resin layer, a polyethylene (LDPE) resin layer, and an adhesive layer" in Example 4. In the hydrothermal reaction treatment, the pulverized product was melted, and the nonhydrolyzable polymer was separated from the aqueous phase in a molten state. When the recovered nonhydrolyzable polymer and hydrolytic component a3 were identified, the nonhydrolyzable polymer was polyethylene, and the hydrolytic component a3 was ε-caprolactam.

The hydrolytic component a3 was identified, and a recovery ratio thereof was calculated. Obtained results are described in Table 19.

### <Identification of hydrolytic component a3>

The hydrolytic component a3 was dissolved in water, subjected to HPLC measurement under the following conditions, and identified by coincidence of a retention time.
LC apparatus: Model 1200 manufactured by Agilent Technologies
MS apparatus: Model 6140 manufactured by Agilent Technologies
Column: Scherzo SW-C18 manufactured by Imtakt
Column temperature: 35°C
Mobile phase A: 0.01% formic acid aqueous solution
Mobile phase B: 200 mM ammonium formate aqueous solution/acetonitrile = 1/1 (v/v)
Detector: PDA and MS
Ionization method and Polarity: electrospray ionization method (ESI) and Positive

**Table 19**

| No. | Hydrothermal reaction treatment conditions | | | Recovery ratio of ε-caprolactam [mol%] |
|---|---|---|---|---|
| | Reaction temperature [°C] | Reaction time [min] | Weight ratio of water added [Water/ Multilayer Film] | |
| Ex. 17-1 | 300 | 60 | 3.3/1 | 71 |
| Ex. 17-2 | | | 5/1 | 78 |
| Ex. 17-3 | | | 10/1 | 76 |
| Ex. 17-4 | 325 | 30 | 2/1 | 65 |
| Ex. 17-5 | | | 3.3/1 | 79 |
| Ex. 17-6 | | | 5/1 | 84 |
| Ex. 17-7 | | | 10/1 | 80 |
| Ex. 17-8 | 350 | 10 | 3.3/1 | 82 |
| Ex. 17-9 | 350 | 15 | 2.5/1 | 75 |
| Ex. 17-10 | | | 3.3/1 | 83 |
| Ex. 17-11 | | | 5/1 | 81 |
| Ex. 17-12 | | | 10/1 | 85 |
| Ex. 17-11 | 380 | 10 | 5/1 | 72 |
| Ex. 17-12 | | | 10/1 | 81 |

| | | | | |
|---|---|---|---|---|
| Remarks: 'Ex.' means Example according to this invention. | | | | |

### [Example 18]

In Example 18, an influence of hydrothermal reaction treatment conditions on a raw material shape was examined using a pulverized product of a "multilayer film (polyamide content: 25.2 mass%) obtained by laminating a polyamide (nylon 6) resin layer, a polyethylene (LDPE) resin layer, and an adhesive layer".

That is, a solid nonhydrolyzable polymer and a hydrolytic component a3 dissolved in an aqueous phase were recovered by performing a hydrothermal reaction treatment under the hydrothermal reaction treatment conditions described in Table 20 below in a similar manner to Example 3 except that the "multilayer film obtained by laminating a polyamide (nylon 6) resin layer, a polyethylene (LDPE) resin layer, and an adhesive layer" (0.5 g, which was cut into a rectangle having the size described in the "raw material shape" column of Table 20) as a sample and water (5 cm³) were used. In the hydrothermal reaction treatment, the pulverized product was melted, and the nonhydrolyzable polymer was separated from the aqueous phase in a molten state. When the recovered nonhydrolyzable polymer and hydrolytic component a3 were identified, the nonhydrolyzable polymer was polyethylene, and the hydrolytic component a3 was ε-caprolactam.

The hydrolytic component a3 was identified, and a recovery ratio thereof was calculated. Obtained results are described in Table 20.

### <Identification of hydrolytic component a3>

The hydrolytic component a3 was dissolved in water, subjected to HPLC measurement under the following conditions, and identified by coincidence of a retention time.
LC apparatus: Model 1200 manufactured by Agilent Technologies
MS apparatus: Model 6140 manufactured by Agilent Technologies
Column: Scherzo SW-C18 manufactured by Imtakt
Column temperature: 35°C
Mobile phase A: 0.01% formic acid aqueous solution
Mobile phase B: 200 mM ammonium formate aqueous solution/acetonitrile = 1/1 (v/v)
Detector: PDA and MS
Ionization method and Polarity: electrospray ionization method (ESI) and Positive

**Table 20**

| No. | Hydrothermal reaction treatment conditions | | | Recovery ratio of ε-caprolactam [mol%] |
|---|---|---|---|---|
| | Reaction temperature [°C] | Reaction time [min] | Raw material shape [Length × Width (mm)] | |
| Ex. 18-1 | 300 | 60 | 50 × 50 | 64 |
| Ex. 18-2 | | | 5 × 5 | 85 |
| Ex. 18-3 | | | 2 × 2 | 74 |
| Ex. 18-4 | 325 | 30 | 50 × 50 | 80 |
| Ex. 18-5 | | | 5 × 5 | 83 |
| Ex. 18-6 | | | 2 × 2 | 73 |

| | | | | |
|---|---|---|---|---|
| Remarks: 'Ex.' means Example according to this invention. | | | | |

### [Example 19]

In Example 19, an influence of hydrothermal reaction treatment conditions on a raw material shape was examined using a pulverized product of a "multilayer film (polyamide content: 24.7 mass%) obtained by laminating a polyamide (nylon 6/66) resin layer, a polyethylene (LDPE) resin layer, and an adhesive layer".

That is, a solid nonhydrolyzable polymer and a hydrolytic component a3 dissolved in an aqueous phase were recovered by performing a hydrothermal reaction treatment under the hydrothermal reaction treatment conditions described in Table 21 below in a similar manner to Example 3 except that the "multilayer film obtained by laminating a polyamide (nylon 6/66) resin layer, a polyethylene (LDPE) resin layer, and an adhesive layer" (0.5 g, which was cut into a rectangle having the size described in the "raw material shape" column of Table 21) as a sample and water (5 cm³) were used. In the hydrothermal reaction treatment, the pulverized product was melted, and the nonhydrolyzable polymer was separated from the aqueous phase in a molten state. When the recovered nonhydrolyzable polymer and hydrolytic component a3 were identified, the nonhydrolyzable polymer was polyethylene, and the hydrolytic component a3 was ε-caprolactam.

The hydrolytic component a3 was identified, and a recovery ratio thereof was calculated. Obtained results are described in Table 21.

### <Identification of hydrolytic component a3>

The hydrolytic component a3 was dissolved in water, subjected to HPLC measurement under the following conditions, and identified by coincidence of a retention time.
LC apparatus: Model 1200 manufactured by Agilent Technologies
MS apparatus: Model 6140 manufactured by Agilent Technologies
Column: Scherzo SW-C18 manufactured by Imtakt
Column temperature: 35°C
Mobile phase A: 0.01% formic acid aqueous solution
Mobile phase B: 200 mM ammonium formate aqueous solution/acetonitrile = 1/1 (v/v)
Detector: PDA and MS
Ionization method and Polarity: electrospray ionization method (ESI) and Positive

**Table 21**

| No. | Hydrothermal reaction treatment conditions | | | Recovery ratio of ε-caprolactam [mol%] |
|---|---|---|---|---|
| | Reaction temperature [°C] | Reaction time [min] | Raw material shape [Length × Width (mm)] | |
| Ex. 19-1 | 300 | 60 | 50 × 50 | 67 |
| Ex. 19-2 | | | 5 × 5 | 73 |
| Ex. 19-3 | | | 2 × 2 | 76 |
| Ex. 19-4 | 325 | 30 | 50 × 50 | 71 |
| Ex. 19-5 | | | 5 × 5 | 80 |
| Ex. 19-6 | | | 2 × 2 | 74 |

| | | | | |
|---|---|---|---|---|
| Remarks: 'Ex.' means Example according to this invention. | | | | |

### [Reference Example 1]

A commercially available automobile door handle (a thermoplastic resin molded body is made of a PC/ABS copolymer, and a metal plating layer is used as a function-imparting layer) was manually crushed into a size of several centimeters (a transfer width is about 3 to 5 cm) with a hammer (first mechanical treatment), but could not be pulverized. Therefore, the automobile door handle was crushed using an orient mill (manufactured by Orient Pulverizer Co., Ltd.) as a pulverizer. As conditions, the amount of material input was about 3 kg, and crushing time was 600 seconds. A second mechanical treatment was thus performed, and those that has passed through 8 mm and 10 mm sieves were collected. When the obtained pulverized product was confirmed, the metal plating layer was not completely peeled off, but a powder containing metal plating as a main component was generated.

Next, 2.99 g of the pulverized product of the door handle obtained by the second mechanical treatment and water (50 cm³) were introduced into a reaction tube having an internal volume of 100 cm³, and the reaction tube was sealed. The reaction tube was put into a molten salt bath, and a hydrothermal treatment was performed under hydrothermal treatment conditions of a hydrothermal treatment temperature of 250°C and a hydrothermal treatment time of one hour. As a result, although the softening points of PC and ABS as polymer components were 150°C and 80 to 110°C, respectively, fragments that had been subjected to the hydrothermal treatment were fused in a "rice cake shape" (specifically, a state in which as a result of fusion of surfaces while substantially maintaining the shape of each of the fragments, a large mass with a gap was formed) while substantially maintaining the shapes. This is estimated to be because the hydrothermal treatment here was performed under a standing condition in which stirring was not intentionally performed, and therefore a high viscosity state was maintained in which own weight viscous flow did not actually occur (thermal "settling" did not occur). The plating layer was generally attached to the polymer, but was easily peeled off when scratched with a tip of the nail. Therefore, it was estimated that the plating layer was easily peeled off by adding a light mechanical treatment, and this was separable based on a principle such as a difference in specific gravity from the polymer. Furthermore, since a byproduct of whitish fine powder was visually confirmed, it was estimated that the byproduct was bisphenol A generated by hydrolysis of PC. From the above, it has been found that the plating layer can be peeled off by a hydrothermal treatment under a temperature condition substantially lower than a softening point, under which own weight viscous flow does not substantially occur, and a hydrolysis product of PC (estimated to be bisphenol A) can be chemically recycled.

As described in Tables 2 and 4 to 21, by subjecting a mixture containing a resin layer containing the hydrolyzable polymer and a resin layer containing the nonhydrolyzable polymer to a hydrothermal reaction treatment, the hydrolyzable polymer A in the mixture can be hydrolyzed and separated, and the hydrolyzable polymer A can be chemically recycled as a raw material compound thereof. In addition, the nonhydrolyzable polymer B in the mixture can be separated in a molten state while favorably maintaining a molecular weight distribution thereof, and the nonhydrolyzable polymer B can be material-recycled as a polymer in which a decrease in average molecular weight is suppressed. In this hydrothermal reaction treatment, it is also possible to avoid precipitation of the hydrolytic component a of the hydrolyzable polymer A as a solid (mixing into the nonhydrolyzable polymer). In particular, when the nonhydrolyzable polymer B is PE (LDPE or LLDPE), the molecular weight of the material-recycled PE largely depended on the hydrothermal treatment conditions, and decreased due to an increase in the treatment temperature and an extension of the treatment time. It is also found that a molecular weight (particularly of LLDPE) decreased while a narrow molecular weight distribution was maintained.

In addition, when the hydrothermal reaction treatment is performed under conditions included in each of the above-described regions, for example, a quadrangular region having the points A to D as vertices, as hydrothermal reaction treatment conditions, the raw material compound of the hydrolyzable polymer A or the nonhydrolyzable polymer B having a high average molecular weight maintaining ratio can be recycled at a high recycling ratio.

From the above results, it is found that even a mixture containing the hydrolyzable polymer A and the nonhydrolyzable polymer B can be hybrid-recycled by hydrolyzing and separating the hydrolyzable polymer A in the mixture and separating the nonhydrolyzable polymer B in the mixture in a state in which the molecular weight distribution thereof is favorably maintained.

### [Example A: Effect verification experiment of mechanical treatment, water absorption treatment, and heating pretreatment]

By performing the separation and recovery method described in the following Example using the multilayer film having the above-described B/A/B structure and a simple substance of each of various hydrolyzable polymers A, it is indicated that the hydrolyzable polymers (various kinds) contained in a mixture to be subjected to a hydrothermal reaction treatment are effectively hydrolyzed in a heating pretreatment, and that such a heating pretreatment is suitable for material recycling without deteriorating the nonhydrolyzable polymer B (PE as a representative example). Common operation thereof will be described below.

### <Common operation (1): vacuum drying treatment>

Each starting sample (a sample stored under normal indoor temperature and humidity conditions. In a case of a film sample, the sample was cut into an appropriate size with scissors.) was precisely weighed and dried in a vacuum oven set to 120°C (The temperature was set to 90°C only for a PE/PA6/PE three-layer film described later in order to avoid softening and fusion of the PE portion.) overnight. A water absorption ratio (mass%) in a state of the starting sample was calculated from a mass difference before and after the vacuum drying. A sample obtained by this vacuum drying may be referred to as an "absolute dry sample".

### <Common operation (2): saturated water absorption treatment>

Each absolute dry sample obtained by the vacuum drying treatment was gently stirred for a total of 24 hours while being heated in 10 times mass of boiling water under atmospheric pressure (The water temperature was set to 90°C only for a PE/PA6/PE three-layer film described later in order to avoid softening and fusion of the PE portion.). A sample obtained by heating in water for 24 hours may be referred to as a "saturated water absorption sample". Water attached to a surface of each saturated water absorption sample thus obtained was wiped off with a wiper, a mass thereof was quickly measured, and a water absorption ratio (mass%) was calculated.

### <Common operation (3): heating pretreatment>

Each saturated water absorption sample obtained by the saturated water absorption treatment was introduced into a heating container (SUS 316 Swagelok pipe of 1,27 cm (1/2 inch) (diameter 10 mm × length 50 mm), both ends of which can be sealed with 0,64 cm (1/4 inch) plugs) previously purged with a dry nitrogen stream (flow rate: 100 mL/min) for one minute, and both ends of the heating container were sealed. During this operation, a tare mass of the heating container, a mass immediately after the sample was introduced, and a mass after the nitrogen stream purge were measured, and the mass of the introduced sample and the mass of the sample after the nitrogen stream purge were calculated, thereby grasping the degree of decrease in a water content due to the nitrogen purge. The heating container in which the sample was sealed was taken out one hour after a time point when a door of a heating furnace (a high temperature heating furnace in a case of 300°C, otherwise a forced circulation dryer) reaching a target temperature (any of 150°C, 200°C, 250°C, and 300°C) was opened and the heating container was quickly left at rest, and the heating container was put into water at room temperature and cooled.

After cooling, water attached to the outside of the heating container was wiped off, and the heating container was vacuum-dried at 40°C to remove the attached water, and then the mass thereof was measured. Immediately after the heating container was opened under atmospheric pressure, the heating container was sealed, and the mass thereof was measured again (This is intended to measure the mass after the pressure is released in view of a possibility that gas is generated by a chemical reaction. Actually, there was no release of gas that can be sensed by an experimenter.). The heating container was opened again, and the heat-treated sample was taken out. When the sample was melted, the sample was attached to and remained on an inner wall of the container, and the total amount of the sample could not be recovered in some cases. However, the sample could be recovered in an amount that did not interfere with visual observation and molecular weight distribution measurement by GPC.

### <Evaluation of hydrolysis behavior>

The recovered product obtained by the heating pretreatment (model experiment) was subjected to (A) visual observation (The recovered product was bent with a hand or cut with a blade as necessary to qualitatively confirm the degree of toughness retention), and (B) GPC measurement to confirm a molecular weight distribution (measurement conditions will be described below).

### (Conditions for measuring normal-temperature GPC)

- GPC apparatus: HLC-8420GPC (manufactured by Tosoh Corporation)
- Column: TSKGel Super AWM-H (6.0 mm diameter × 15 cm) × 2 (manufactured by Tosoh Corporation)
- Detector: differential refractometer (RI detector), Polarity = (+)
- Eluent: 1,1,1,3,3,3-hexafluoro-2-propanol (abbreviation: HFIP, (manufactured by FUJIFILM Wako Pure Chemical Corporation) + 10 mM-sodium trifluoroacetate
- Flow rate: 0.3 mL per minute
- Column temperature: 40°C
- Sample concentration: 1 mg/mL Note that for a "PE/PA6/PE three-layer film" of Example A-3 described later, a concentration based on a calculated mass of a PA6 portion was used.
- Sample injection amount: 20 µL
- Sample pretreatment: The sample was weighed, a predetermined amount of eluent was added thereto, and the mixture was allowed to stand overnight at room temperature for dissolution. The mixture was gently shaken, and then filtered through a PTFE cartridge filter having a pore size of 0.45 µm. An insoluble matter was confirmed only in a case of the "PE/PA6/PE three-layer film" of Example A-3 described later by visual observation. This was considered that the PE portion was not dissolved.
- Calibration curve: three-dimensional approximate curve using standard PMMA (polymethyl methacrylate manufactured by Agilent Technologies). Therefore, a value obtained by this is a molecular weight in terms of PMMA.

### (Conditions for measuring high-temperature GPC)

This high-temperature GPC was applied only for evaluation of the PE portion constituting the "PE/PA6/PE three-layer film" of Example A-3 described later.
- GPC apparatus: HLC-8320GPC/HT (manufactured by Tosoh Corporation)
- Column: TSKGel guardcolumnHHR (30) HT (7.5 mm diameter × 7.5 cm) × 1 + TSKGel GMHHR (20) HT (7.8 mm diameter × 30 cm) × 3 (both manufactured by Tosoh Corporation)
- Detector: differential refractometer (RI detector), Polarity = (-)
- Eluent: 1,2,4-trichlorobenzene (abbreviated as TCB, manufactured by FUJIFILM Wako Pure Chemical Corporation, used for GPC) + dibutylhydroxytoluene (abbreviation: BHT, concentration: 0.05 wt%)
- Flow rate: 1.0 mL per minute
- Column temperature: 140°C
- Sample concentration: 1 mg/mL
- Sample injection amount: 0.3 mL
- System temperature: 40°C
- Sample pretreatment: 50 mg of the PE/PA6/PE three-layer film or a sample obtained by heating pretreatment (model experiment) thereof was weighed and immersed in 40 mL of 1,1,1,3,3,3-hexafluoro-2-propanol (abbreviation: HFIP, manufactured by FUJIFILM Wako Pure Chemical Corporation) at room temperature for 18 hours. A sample (insoluble matter) was removed and immersed in fresh HFIP (20 mL) at room temperature for three hours. A remaining solid was dried in a vacuum dryer at room temperature for two hours. The vacuum dried sample thus obtained was weighed, and shaken and dissolved in TCB (containing BHT) in an amount making a concentration of 1 mg/mL at 140°C for one hour. A minute and white insoluble matter was observed in each of samples. This insoluble matter was filtered off by heating filtration with a sintered filter having a pore size of 0.5 µm, and only a soluble component (solution portion) was subjected to GPC measurement.
- Calibration curve: Using a five-dimensional approximate curve using standard polystyrene (manufactured by TOSOH CORPORATION), conversion was performed into a molecular weight in terms of PE using a Q-factor.

### [Example A-1]

Example A-1 was performed using the PA6 pellet simple substance used in Example 3 as a treatment target.

This PA6 pellet was used as a starting sample, and the common operations (1) to (3) were performed. A water content at a stage of a saturated water absorption sample was 11.1 mass%. The treatment temperature in the common operation (3) was set to three levels of 200°C (Example A-1a), 250°C (Example A-1b), and 300°C (Example A-1c). The following molecular weight change ratios of products (water-decomposable polymers) by the heat treatments at the temperatures were 83%, 21%, and 12%, respectively.

### Molecular weight change ratio (%) = [MwA/MwF] × 100

Here, MwF represents a weight average molecular weight of an absolute dry hydrolyzable polymer, and MwA represents a weight average molecular weight of a product water-degradable polymer.

In addition, all the products were in a molten lump state. In the case of the treatment at 200°C, the product maintained such toughness that the product did not crack even when the product was cut with scissors, but in the case of the treatment at 250°C, the product was embrittled while opacity thereof increased, and in the case of the treatment at 300°C, a completely opaque and waxy (a property unique to a polymer, in which a polymer is cut smoothly with scissors without response felt in a hand, is lost) product was obtained.

From the above observation and results of the molecular weight change ratio (%), it has been found that PA6 in a saturated water absorption state has a reduced molecular weight at 200°C or higher, and is embrittled and softened at 250°C or higher. From this, it has been found that, when the PA6 layer in the multilayer film is made to absorb water in advance, hydrolysis can proceed to some extent by performing a heating pretreatment under a temperature condition of about 200°C or higher, and that there is a possibility that conditions of a subsequent hydrothermal reaction treatment can be made mild with deterioration in adhesiveness between the multilayer film layers and a progress of peeling thereof due to embrittlement or softening under a temperature condition of about 250°C or higher. Note that a reason why the product was melted and turned into a lump even by heating at 200°C, which is lower than a generally known melting point (about 230°C) of PA6, was estimated to be that an apparent melting point of the entire sample decreased, and the product was melted and flowed due to an increase in a fraction having a low melting point due to a decrease in molecular weight due to hydrolysis. It was considered that a hydrolysis reaction was promoted by an effect similar to stirring due to such flow start.

### [Example A-2]

Example A-2 was performed using a PA6 pellet simple substance (absolute dry state) as a treatment target in a similar manner to Example A-1c except that the common operation (2) was not performed (saturated water absorption was not performed) in Example A-1c.

As a result, a molecular weight change ratio after heating at 300°C for one hour was 109%. Since the weight average molecular weight did not decrease, it was confirmed that the molecular weight of PA6 was substantially maintained even after heating at 300°C for one hour in an absolute dry state. Note that, in this experiment, a weight average molecular weight Mw of the PA6 simple substance in an absolute dry state was observed to be slightly increased by heating at 300°C for one hour, and this was estimated to be caused by volatilization of a contained low molecular weight component and/or progress of a chemical reaction (Examples: polymerization reaction and amide exchange reaction) that changes a molecular weight distribution.

### [Example A-3]

Example A-3 was performed using a "laminated film obtained by laminating a polyamide (nylon 6, abbreviation: PA6) resin layer having a thickness of 15 µm and a polyethylene (LLDPE) resin layer having a thickness of 50 µm with a urethane-based adhesive" (also abbreviated as PE/PA6/PE three-layer film) as a treatment target.

As a result, weight average molecular weights Mw of the PA6 portion and the PE portion were observed to be 71000 and 50000, respectively, by GPC evaluation in an absolute dry sample state.

It was intended to intendedly perform a mechanical treatment (manual tearing and piercing with a blade) at a stage of a starting sample to increase a water entry path or a hydrolysis reaction portion. As a result of measuring and integrating dimensions of a large number of flaws formed by this mechanical treatment with a ruler, an end surface increase magnification was 3.5 times.

Then, the common operations (1) to (3) were performed. A water content at a stage of a saturated water absorption sample was 2.93 mass%. The PE portion and the PA portion had specific gravities of 0.9 and 1.1, respectively. When it was assumed that there was no water absorption in the PE portion and the thickness of each of the layers was used, the water content of the PA6 portion was calculated to be 11.7 mass%. Therefore, it was estimated that the PA6 portion here was in a water absorption state equivalent to the measured value (11.1 mass%) in Example A-1. The treatment temperatures for the common operation (3) were 200°C (Example A-3a), 250°C (Example A-3b), and 300°C (Example A-3c). In each of the products in these three Examples, the film was in a fused lump state, and a peeling-prone portion (bubbles and irregularities considered to be caused by foaming, rough feeling, or the like) was observed in some places. This was estimated to be because adhesiveness at an interface with PE was weakened due to self-destruction (embrittlement, softening, or foaming) by hydrolysis of PA6 as an inner layer. In the product treated at 250°C (Example A-3b), more foaming (air bubbles) was observed, and an amine odor was faintly felt. The product treated at 300°C (Example A-3c) was a soft porous lump which had increased opacity and an amine odor and was easily bent with a hand, and a cross section obtained by bending and breaking the product with a hand had a fine split and whitening. Therefore, it was considered that PA6 lost its polymeric property and became waxy, and as a result, an adhesive interface with PE was easily peeled off by an external force.

As for GPC evaluation results, the PA6 portions of the products treated at 200°C, 250°C, and 300°C had weight average molecular weights Mw of 65000, 22000, and 10000, respectively, and the PE portions of the products treated at 200°C and 250°C had weight average molecular weights Mw of 52000 and 51000, respectively (the product treated at 300°C was not subjected to GPC evaluation). From the above results, it was confirmed that the PA6 portion showed a molecular weight reduction behavior by hydrolysis similar to that in Example A-1 (heating of PA6 simple substance in a water absorption state), and the molecular weight of the PE portion was not reduced under such a heating condition.

As a finding on the effect of the mechanical treatment in the above three Examples, an experimental result was obtained in which there was a difference in a recovery ratio of caprolactam depending on the shape (dimensions of a cut film) when the same PE/PA6/PE three-layer film was subjected to a hydrothermal reaction treatment at 300°C for one hour. That is, when the dimensions of the cut film were compared between 50 mm × 50 mm and 5 mm × 5 mm, the caprolactam recovery ratios were 64% and 85%, respectively. The recovery ratio of caprolactam can be regarded as an index of the degree of hydrolysis.

Next, for each of hydrolyzable polymers of PET (polyethylene terephthalate), PBT (polybutylene terephthalate), PA6/66 (nylon 6/66 copolymer), and PAMXD6 (polyamide obtained by using metaxylenediamine and adipic acid as polymerization raw materials), effects of a mechanical treatment, a water absorption treatment, and a heating pretreatment on each polymer simple substance were verified in a similar manner to Example A-1. The results are described below.

### [Example A-4: PET simple substance]

Using a Toyobo ester (registered trademark) film E5102 (trade name, Toyobo Co., Ltd., PET film) (weight average molecular weight Mw in an absolute dry sample state: 24000) as a starting sample, an experimental operation similar to that in Example A-1 was performed.

A water content at a stage of a saturated water absorption sample was 0.38 mass%. The treatment temperature in the common operation (3) was set to two levels of 200°C and 250°C. As a result of GPC evaluation, the weight average molecular weights Mw of products obtained by the heat treatment at the temperatures were observed to be 19000 and 8100, respectively. In the case of the treatment at 200°C, the product maintained an original film shape and toughness, but in the case of the treatment at 250°C, the product was a fusion-prone lump having such brittleness that the product was broken when the product was cut with scissors. From this, it has been found that, when the PET layer in the multilayer film is made to absorb water in advance, hydrolysis can proceed to some extent by performing a heating pretreatment under a temperature condition of about 200°C or higher, and that there is a possibility that conditions of a subsequent hydrothermal reaction treatment can be made mild with deterioration in adhesiveness between the multilayer film layers and a progress of peeling thereof due to embrittlement under a temperature condition of about 250°C or higher.

### [Example A-5: PBT simple substance]

Using PBT (registered trademark "NOVADURAN", grade name "5008" manufactured by Mitsubishi Engineering-Plastics Corporation, white pellet shape, having a weight average molecular weight Mw of 24000 in an absolute dry sample state) as a starting sample, an experimental operation similar to that in Example A-4 was performed.

A water content at a stage of a saturated water absorption sample was 0.56 mass%. The weight average molecular weight Mw of the heat-treated product was observed to be 21000 in the 200°C treatment and 14000 in the 250°C treatment. In the case of the treatment at 200°C, the product maintained an original pellet shape and toughness, but in the treatment at 250°C, the product was a fused lump having such brittleness that the product was broken when the product was cut with scissors. Therefore, consideration and estimation similar to those in Example A-4 can be made.

### [Example A-6: PA6/66 simple substance]

Using PA6/66 (weight-average molecular weight Mw in a form of white pellets with slight transparency and in an absolute dry sample state: 85000.) used in Example 5 as a starting sample, an experimental operation similar to that in Example A-4 was performed.

A water content at a stage of a saturated water absorption sample was 13.4 mass%. The weight average molecular weight Mw of the heat-treated product was observed to be 66000 in the 200°C treatment and 16000 in the 250°C treatment. In the case of the treatment at 200°C, a molten lump maintaining toughness was obtained, and in the case of the treatment at 250°C, a waxy product which was a molten lump having increased opacity and was smoothly cut when cut with scissors was obtained. Therefore, consideration and estimation similar to those in Example A-4 can be made.

### [Example A-7: PAMXD 6 simple substance]

Using PAMXD6 (registered trademark "Reny", grade name" 6000", white pellet shape with slight transparency, weight average molecular weight Mw in an absolute dry sample state: 54000) manufactured by Mitsubishi Engineering-Plastics Corporation as a starting sample, an experimental operation similar to that in Example A-4 was performed.

A water content at a stage of a saturated water absorption sample was 7.0 mass%. The weight average molecular weight Mw of the heat-treated product was observed to be 39000 in the 200°C treatment and 15000 in the 250°C treatment. In the case of the treatment at 200°C, the product had a pellet shape (partially fused) maintaining toughness, but in the treatment at 250°C, a brittle product which was a fused lump having increased opacity and was broken when the product was cut with scissors was obtained. Therefore, consideration and estimation similar to those in Example A-4 can be made.

From the above results, it is found that when the mixture is subjected to the water absorption treatment and the heating pretreatment before being subjected to the hydrothermal reaction treatment, conditions of the hydrothermal reaction treatment that maintain or improve the recovery ratio of the hydrolyzable polymer A and do not reduce the average molecular weight maintaining ratio of the nonhydrolyzable polymer B (specifically, the treatment temperature is lowered) can be set, and hybrid recycling can be performed at lower cost.

## Claims

1. A separation and recovery method of separating and recovering, from a mixture containing at least a resin layer 1 containing a hydrolyzable polymer A as a main component and a resin layer 2 containing a nonhydrolyzable polymer B as a main component, at least one hydrolytic component a of the hydrolyzable polymer A and the nonhydrolyzable polymer B, the method comprising:
a decomposition and separation step of subjecting the mixture to a hydrothermal reaction treatment to hydrolyze and separate the hydrolyzable polymer A in the mixture, and to separate the nonhydrolyzable polymer B in the mixture;
wherein the hydrothermal reaction treatment is performed in water of 300 to 5000 parts by mass with respect to 100 parts by mass of the mixture;
wherein the mixture to be subjected to the hydrothermal reaction treatment is subjected to a water absorption treatment and to a heating pretreatment; and
wherein the recovered nonhydrolyzable polymer B maintains an average molecular weight of 0.7 times or more an average molecular weight of the nonhydrolyzable polymer B before the hydrothermal reaction treatment, wherein the average molecular weight of a polymer is a value measured by a GPC measurement as described in the Examples.

2. The separation and recovery method according to claim 1, wherein the hydrothermal reaction treatment is performed;
under a pressure of 101 kPa (1 atm) or more at a treatment temperature and a treatment time included in a quadrangular region (including a boundary line) having a point A1 (1, 390), a point 2 (1, 250), a point 3 (60, 250), and a point 4 (60, 375) as vertices in an orthogonal coordinate system in which an x axis represents a treatment time (minute) and a y axis represents a treatment temperature (°C), and/or
under a pressure of 101 kPa (1 atm) or more at a treatment temperature and a treatment time included in a quadrangular region (including a boundary line) having a point A (1, 375), a point B (1, 325), a point C (60, 275), and a point D (60, 300) as vertices in an orthogonal coordinate system in which an x axis represents a treatment time (minute) and a y axis represents a treatment temperature (°C).

3. The separation and recovery method according to claim 1 or 2, wherein the hydrolytic component a of the hydrolyzable polymer A is transferred to an aqueous phase.

4. The separation and recovery method according to any one of claims 1 to 3, wherein the nonhydrolyzable polymer B is separated from an aqueous phase.

5. The separation and recovery method according to any one of claims 1 to 4, wherein the mixture to be subjected to the hydrothermal reaction treatment is obtained by removing a solid component from a melt of the mixture.

6. The separation and recovery method according to any one of claims 1 to 5, wherein the hydrolytic component a contains one or more kinds of components selected from the group consisting of terephthalic acid, 2,6-naphthalenedicarboxylic acid, ethylene glycol, 1,3-propanediol, 1,4-butanediol, tetrahydrofuran, aminocaproic acid, ε-caprolactam, hexamethylenediamine, adipic acid, and derivatives thereof.

7. The separation and recovery method according to any one of claims 1 to 6, wherein the nonhydrolyzable polymer B is one or more kinds of polymers selected from the group consisting of polyethylene, polypropylene, and polystyrene.

8. The separation and recovery method according to any one of claims 1 to 7, wherein the mixture is a laminate.

9. The separation and recovery method according to claim 8, wherein the laminate includes two or more layers of at least one of the resin layer 1 and the resin layer 2; and or
wherein the laminate includes at least one of a coating layer C and an adhesive layer D.

10. The separation and recovery method according to any one of claims 1 to 9, wherein when the hydrolyzable polymer A contained in the resin layer 1 is 100%, the hydrolytic component a is recovered in a molar ratio of 70% or more.

11. The separation and recovery method according to any one of claims 1 to 10, wherein the mixture that has been subjected to a water absorption treatment and is to be subjected to the hydrothermal reaction treatment is subjected to a heating pretreatment in a temperature range of 200 to 300°C.

12. The separation and recovery method according to any one of claims 1 to 11, wherein a mechanical treatment is applied to the mixture to be subjected to the water absorption treatment.

## Patentansprüche

1. Verfahren zur Trennung und Rückgewinnung, bei dem aus einem Gemisch, das mindestens eine Harzschicht 1, die ein hydrolysierbares Polymer A als Hauptkomponente enthält, und eine Harzschicht 2, die ein nicht hydrolysierbares Polymer B als Hauptkomponente enthält, mindestens eine hydrolytische Komponente a des hydrolysierbaren Polymers A und das nicht hydrolysierbare Polymer B getrennt und rückgewonnen wird, wobei das Verfahren umfasst:
einen Zersetzungs- und Trennungsschritt, bei dem das Gemisch einer hydrothermalen Reaktionsbehandlung unterzogen wird, um das hydrolysierbare Polymer A im Gemisch zu hydrolysieren und zu separieren sowie das nicht hydrolysierbare Polymer B im Gemisch abzutrennen;
wobei die hydrothermale Reaktionsbehandlung in Wasser in einer Menge von 300 bis 5000 Masseteilen, bezogen auf 100 Masseteile des Gemischs, durchgeführt wird;
wobei das der hydrothermalen Reaktionsbehandlung zu unterziehende Gemisch einer Wasserabsorptionsbehandlung und einer Vorbehandlung durch Erhitzen unterzogen wird; und
wobei das gewonnene nicht hydrolysierbare Polymer B ein durchschnittliches Molekulargewicht von mindestens dem 0,7-fachen des durchschnittlichen Molekulargewichts des nicht hydrolysierbaren Polymers B vor der hydrothermalen Reaktionsbehandlung beibehält, wobei das durchschnittliche Molekulargewicht eines Polymers ein Wert ist, der durch eine GPC-Messung gemäß den Beschreibungen in den Beispielen ermittelt wird.

2. Verfahren zur Trennung und Rückgewinnung nach Anspruch 1, wobei die hydrothermale Reaktionsbehandlung durchgeführt wird;
bei einem Druck von 101 kPa (1 atm) oder mehr bei einer Behandlungstemperatur und einer Behandlungszeit, die in einem viereckigen Bereich (einschließlich einer Begrenzungslinie) liegen mit einem Punkt A1 (1, 390), einem Punkt 2 (1, 250), einem Punkt 3 (60, 250) und einem Punkt 4 (60, 375) als Eckpunkte in einem orthogonalen Koordinatensystem, in dem die x-Achse die Behandlungszeit (Minuten) und die y-Achse die Behandlungstemperatur (°C) darstellt, und/oder
bei einem Druck von 101 kPa (1 atm) oder mehr bei einer Behandlungstemperatur und einer Behandlungszeit, die in einem viereckigen Bereich (einschließlich einer Begrenzungslinie) liegen, der einen Punkt A(1, 375), einen Punkt B (1, 325), einen Punkt C (60, 275) und einen Punkt D (60, 300) als Eckpunkte in einem orthogonalen Koordinatensystem, in dem die x-Achse die Behandlungszeit (Minuten) und die y-Achse die Behandlungstemperatur (°C) darstellt.

3. Verfahren zur Trennung und Rückgewinnung nach Anspruch 1 oder 2, wobei die hydrolytische Komponente a des hydrolysierbaren Polymers A in eine wässrige Phase überführt wird.

4. Verfahren zur Trennung und Rückgewinnung nach einem der Ansprüche 1 bis 3, wobei das nicht hydrolysierbare Polymer B aus einer wässrigen Phase separiert wird.

5. Verfahren zur Trennung und Rückgewinnung nach einem der Ansprüche 1 bis 4, wobei das der hydrothermalen Reaktionsbehandlung zu unterziehende Gemisch durch Entfernen einer festen Komponente aus einer Schmelze des Gemisches erhalten wird.

6. Verfahren zur Trennung und Rückgewinnung nach einem der Ansprüche 1 bis 5, wobei die hydrolytische Komponente a eine oder mehrere Arten von Komponenten enthält ausgewählt aus der Gruppe bestehend aus Terephthalsäure, 2,6-Naphthalindicarbonsäure, Ethylenglykol, 1,3-Propandiol, 1,4-Butandiol, Tetrahydrofuran, Aminocapronsäure, ε-Caprolactam, Hexamethylendiamin, Adipinsäure und deren Derivate.

7. Verfahren zur Trennung und Rückgewinnung nach einem der Ansprüche 1 bis 6, wobei das nicht hydrolysierbare Polymer B eine oder mehrere Arten von Polymeren ist, ausgewählt aus der Gruppe bestehend aus Polyethylen, Polypropylen und Polystyrol.

8. Verfahren zur Trennung und Rückgewinnung nach einem der Ansprüche 1 bis 7, wobei das Gemisch ein Laminat ist.

9. Verfahren zur Trennung und Rückgewinnung nach Anspruch 8, wobei das Laminat zwei oder mehr Schichten aus mindestens einer der Harzschichten 1 und 2 umfasst; und/oder
wobei das Laminat mindestens eine Beschichtungsschicht C und/oder eine Klebeschicht D umfasst.

10. Verfahren zur Trennung und Rückgewinnung nach einem der Ansprüche 1 bis 9, wobei, wenn das in der Harzschicht 1 enthaltene hydrolysierbare Polymer A 100 % beträgt, die hydrolytische Komponente a in einem Molverhältnis von 70 % oder mehr rückgewonnen wird.

11. Verfahren zur Trennung und Rückgewinnung nach einem der Ansprüche 1 bis 10, wobei das Gemisch, das einer Wasserabsorptionsbehandlung unterzogen wurde und der hydrothermalen Reaktionsbehandlung unterzogen werden soll, einer Erhitzungsvorbehandlung in einem Temperaturbereich von 200 bis 300 °C unterzogen wird.

12. Verfahren zur Trennung und Rückgewinnung nach einem der Ansprüche 1 bis 11, wobei das der Wasserabsorptionsbehandlung zu unterziehende Gemisch einer mechanischen Behandlung unterzogen wird.

## Revendications

1. Procédé de séparation et de récupération pour séparer et récupérer, à partir d'un mélange contenant au moins une couche de résine 1 comprenant un polymère A hydrolysable comme composant principal et une couche de résine 2 comprenant un polymère B non hydrolysable comme composant principal, au moins un composant hydrolytique a du polymère A hydrolysable et le polymère B non hydrolysable, le procédé comprenant:
une étape de décomposition et de séparation pour soumettre le mélange à un traitement par réaction hydrothermique afin d'hydrolyser et de séparer le polymère A hydrolysable présent dans le mélange, et séparer le polymère B non hydrolysable présent dans le mélange;
dans lequel le traitement par réaction hydrothermique est effectué dans de l'eau en une quantité de 300 à 5 000 parties en masse pour 100 parties en masse du mélange;
dans lequel le mélange devant être soumis au traitement par réaction hydrothermique est soumis à un traitement d'absorption d'eau et à un prétraitement thermique; et
dans lequel le polymère B non hydrolysable récupéré conserve un poids moléculaire moyen égal ou supérieur à 0,7 fois le poids moléculaire moyen du polymère B non hydrolysable avant le traitement par réaction hydrothermique, le poids moléculaire moyen d'un polymère étant une valeur mesurée par une analyse GPC telle que décrite dans les exemples.

2. Procédé de séparation et de récupération selon la revendication 1, dans lequel le traitement par réaction hydrothermique est effectué;
sous une pression de 101 kPa (1 atm) ou plus, à une température de traitement et pendant une durée de traitement comprises dans une région quadrangulaire (y compris la ligne de délimitation)
ayant pour sommets un point A1 (1, 390), un point 2 (1, 250), un point 3 (60, 250) et un point 4 (60, 375) dans un système de coordonnées orthogonales dans lequel l'axe x représente la durée de traitement (en minutes) et l'axe y représente la température de traitement (en °C), et/ou sous une pression de 101 kPa (1 atm) ou plus, à une température de traitement et une durée de traitement comprises dans une région quadrangulaire (y compris une ligne de délimitation) ayant pour sommets un point A (1, 375), un point B (1, 325), un point C (60, 275) et un point D (60, 300) comme sommets dans un système de coordonnées orthogonales dans lequel l'axe x représente la durée de traitement (en minutes) et l'axe y représente la température de traitement (en °C).

3. Procédé de séparation et de récupération selon la revendication 1 ou 2, dans lequel le composant hydrolytique a du polymère hydrolysable A est transféré dans une phase aqueuse.

4. Procédé de séparation et de récupération selon l'une quelconque des revendications 1 à 3, dans lequel le polymère non hydrolysable B est séparé d'une phase aqueuse.

5. Procédé de séparation et de récupération selon l'une quelconque des revendications 1 à 4, dans lequel le mélange à être soumis au traitement par réaction hydrothermique est obtenu en éliminant un composant solide d'une masse fondue dudit mélange.

6. Procédé de séparation et de récupération selon l'une quelconque des revendications 1 à 5, dans lequel le composant hydrolytique a contient un ou plusieurs types de composants choisis parmi le groupe constitué de l'acide téréphtalique, de l'acide 2,6-naphtalènedicarboxylique, de l'éthylène glycol, de le 1,3-propanediol, de le 1,4-butanediol, de le tétrahydrofurane, de l'acide aminocaproïque, de l'ε-caprolactame, de l'hexaméthylènediamine, de l'acide adipique et de leurs dérivés.

7. Procédé de séparation et de récupération selon l'une quelconque des revendications 1 à 6, dans lequel le polymère B non hydrolysable est constitué d'un ou plusieurs types de polymères choisis parmi le groupe comprenant le polyéthylène, le polypropylène et le polystyrène.

8. Procédé de séparation et de récupération selon l'une quelconque des revendications 1 à 7, dans lequel le mélange est un stratifié.

9. Procédé de séparation et de récupération selon la revendication 8, dans lequel le stratifié comprend deux couches ou plus d'au moins l'une parmi la couche de résine 1 et la couche de résine; et/ou dans lequel le stratifié comprend au moins l'une parmi une couche de revêtement C et une couche adhésive D.

10. Procédé de séparation et de récupération selon l'une quelconque des revendications 1 à 9, dans lequel, lorsque le polymère hydrolysable A contenu dans la couche de résine 1 est à 100 %, le composant hydrolytique a est récupéré dans un rapport molaire de 70 % ou plus.

11. Procédé de séparation et de récupération selon l'une quelconque des revendications 1 à 10, dans lequel le mélange qui a été soumis à un traitement d'absorption d'eau et qui doit être soumis au traitement de réaction hydrothermique est soumis à un prétraitement thermique dans une plage de températures de 200 à 300 °C.

12. Procédé de séparation et de récupération selon l'une quelconque des revendications 1 à 11, dans lequel un traitement mécanique est appliqué au mélange devant être soumis au traitement d'absorption d'eau.
